(19)

Europäisches
Patentamt
European
Patent Office
Office européen
des brevets

(11) **EP 2 595 384 A1**

(12) **EUROPEAN PATENT APPLICATION**
published in accordance with Art. 153(4) EPC

(43) Date of publication:
**22.05.2013 Bulletin 2013/21**

(21) Application number: **11806719.8**

(22) Date of filing: **08.07.2011**

(51) Int Cl.:
**H04N 7/30** (2006.01)

(86) International application number:
**PCT/JP2011/065735**

(87) International publication number:
**WO 2012/008389 (19.01.2012 Gazette 2012/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.07.2010 JP 2010162279
28.10.2010 JP 2010241769**

(71) Applicant: **Sony Corporation
Tokyo 108-0075 (JP)**

(72) Inventor: **KONDO, Kenji
Tokyo 108-0075 (JP)**

(74) Representative: **Lewis, Darren John
D Young & Co LLP
120 Holborn
London EC1N 2DY (GB)**

(54) **IMAGE PROCESSING DEVICE, IMAGE PROCESSING METHOD, AND PROGRAM**

(57) The present technology relates to an image processing device, an image processing method, and a program capable of reducing the amount of processing required for ROT and DCT or inverse DCT and inverse ROT. Image information obtained by decoding an encoded image is dequantized to obtain a low frequency component of the image information, which is obtained by a first orthogonal transform unit, and to obtain a frequency component higher than the low frequency component of the image information, which is obtained by a second orthogonal transform unit. The low frequency component and the high frequency component are subjected to an inverse orthogonal transform according to the same method. The present technology can be applied when encoding and decoding images, for example.

FIG. 5

**Description**

TECHNICAL FIELD

The present technology relates to an image processing device, an image processing method, and a program, and more particularly to an image processing device, an image processing method, and a program capable of reducing the amount of computation required for an orthogonal transform process or an inverse orthogonal transform process.

BACKGROUND ART

An encoding scheme that uses an orthogonal transform called a rotation transform (ROT) has been considered as an encoding scheme corresponding to a next-generation Advanced video coding (AVC) scheme (for example, see Patent Document 1). The conventional discrete cosine transform (DCT) which is widely used in video coding is not optimal in some situations.
For example, when a transform target has a strong directional component, the DCT basis vector may not satisfactorily express the strong directional component.
In general, although directional transform (ROT) can solve the above problem, it is difficult to perform ROT because the ROT requires many floating point operations and requires that a transform target block has a square shape. In particular, it is more difficult to apply the ROT when there are a large number of block sizes.
Therefore, a method has been proposed in which a processing unit that performs ROT with a small number of block sizes is designed, and ROT is performed on only a low frequency component as a second transform following the DCT.

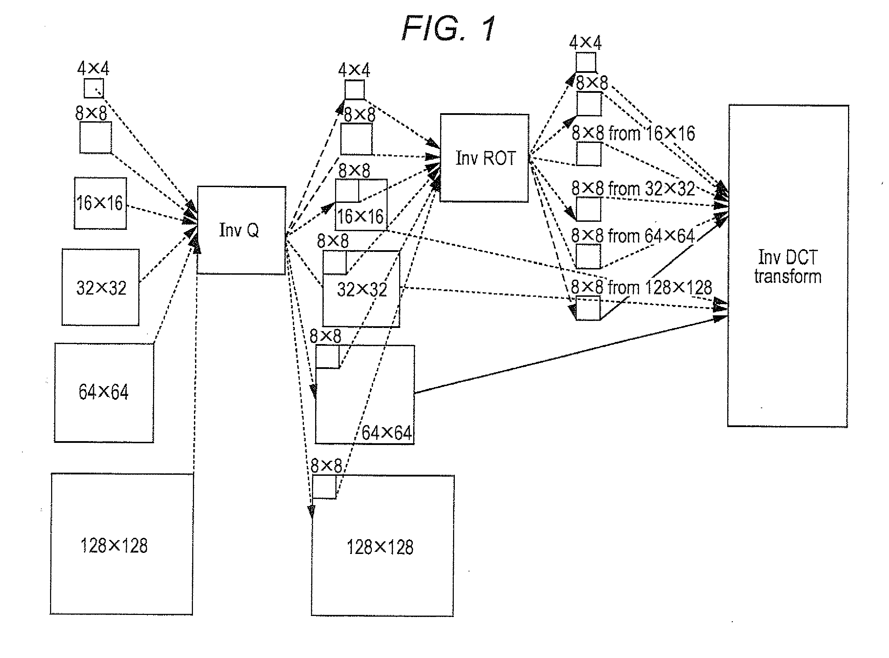

Fig. 1 illustrates an example of the steps of inverse ROT in a decoder that decodes encoded image data by performing orthogonal transform according to such a method.
White boxes on the left side are image data as residual information that is extracted from encoded image data. The image data is dequantized for respective blocks made up of the pixel values of the $4\times4$, $8\times8$, $16\times16$, $32\times32$, $64\times64$, or $128\times128$ pixels. Moreover, only a $4\times4$ or 8x8 pixel block made up of a low frequency component among the dequantized blocks is subjected to inverse ROT, and the coefficients obtained after the inverse ROT and the remaining high frequency component of the dequantized blocks are subjected to inverse DCT.
By doing so, in the above-described method, it is necessary to prepare only block sizes of $4\times4$ or $8\times8$ pixels as a block size for ROT and inverse ROT.

CITATION LIST

NON-PATENT DOCUMENT

Non-Patent Document 1: http://wftp3.itu.int/av-arch/jctvc-site/2010_04_A_Dresden/JCTVC-A124.zip (searched on October 28, 2010)

SUMMARY OF THE INVENTION

PROBLEMS TO BE SOLVED BY THE INVENTION

However, a problem occurs when the block size of the intra prediction is as small as $4\times4$ pixels. Specifically, in order to perform intra prediction of the respective blocks, since the decoded image data of the neighboring block including a block to the left of the corresponding block is required, it is difficult to perform intra prediction of the respective blocks in parallel. Moreover, in the above-described method, in order to obtain the decoded image data, a large number of processes such as DCT, ROT, quantization, dequantization, inverse ROT, and inverse DCT are required.
Thus, when the block size of the intra prediction is small, the longest period required for encoding and decoding macroblocks or coding units (CUs) increases, and it is very difficult to use the above-described method in applications that require real-time properties. Here, the CU is the same concept as the macroblock in the AVC scheme.
The present technology has been made in view of such a circumstance and aims to reduce the amount of processing required for ROT and DCT or inverse DCT and inverse ROT.

SOLUTION TO PROBLEMS

An image processing device or a program according to an aspect of the present technology is an image processing device including: a dequantization unit that dequantizes a quantized image to obtain a low frequency component having a predetermined size of the image, which is obtained by performing a second orthogonal transform after a first orthogonal transform, and to obtain a high frequency component, which is a component other than the low frequency component of the image and is obtained by the first orthogonal transform; and an inverse orthogonal transform unit that, when a size of the image is the predetermined size, performs a third inverse orthogonal transform, which is a combined transform of a first inverse orthogonal transform corresponding to the first orthogonal transform and a second inverse orthogonal transform corresponding to the second orthogonal transform, on the image which is the low frequency component, and that, when the size of the image is larger than the predetermined size, performs the second inverse orthogonal transform on the low frequency component and performs the first inverse orthogonal transform on the low frequency component having been subjected to the second inverse orthogonal transform and the high frequency component obtained by the dequantization unit, or a program for causing a computer to function as the image processing device.

An image processing method according to an aspect of the present technology is an image processing method including the steps of: dequantizing a quantized image to obtain a low frequency component having a predetermined size of the image, obtained by performing a second orthogonal transform after a first orthogonal transform and to obtain a high frequency component which is a component other than the low frequency component of the image, obtained by the first orthogonal transform; when the size of the image is the predetermined size, performing a third inverse orthogonal transform, which is a combined transform of a first inverse orthogonal transform corresponding to the first orthogonal transform and a second inverse orthogonal transform corresponding to the second orthogonal transform, on the image which is the low frequency component; when the size of the image is larger than the predetermined size, performing the second inverse orthogonal transform on the low frequency component; and performing the first inverse orthogonal transform on the low frequency component having been subjected to the second inverse orthogonal transform and the high frequency component obtained by the dequantization unit.

In the aspect of the present technology, a quantized image is dequantized to obtain a low frequency component having a predetermined size of the image, obtained by performing a second orthogonal transform after a first orthogonal transform and to obtain a high frequency component which is a component other than the low frequency component of the image, obtained by the first orthogonal transform. When the size of the image is the predetermined size, a third inverse orthogonal transform, which is a combined transform of a first inverse orthogonal transform corresponding to the first orthogonal transform and a second inverse orthogonal transform corresponding to the second orthogonal transform, is performed on the image which is the low frequency component. When the size of the image is larger than the predetermined size, the second inverse orthogonal transform is performed on the low frequency component, and the first inverse orthogonal transform is performed on the low frequency component having been subjected to the second inverse orthogonal transform and the high frequency component obtained by the dequantization unit.

EFFECTS OF THE INVENTION

According to the aspect of the present technology, it is possible to reduce the amount of processing required for ROT and DCT or inverse DCT and inverse ROT.

BRIEF DESCRIPTION OF DRAWINGS

Fig. 1 is a diagram illustrating an example of the steps of ROT in a decoder.
Fig. 2 is a block diagram illustrating a configuration example of an AVC encoder.
Fig. 3 is a block diagram illustrating a configuration example of an AVC decoder.
Fig. 4 is a block diagram illustrating a configuration example of portions corresponding to an orthogonal transformer, a quantizer, a dequantizer, and an inverse orthogonal transformer when ROT is introduced.
Fig. 5 is a diagram for describing an improvement of ROT on the encoder side.
Fig. 6 is a block diagram illustrating a configuration example corresponding to portions corresponding to a dequantizer and an inverse orthogonal transformer when ROT is introduced.
Fig. 7 is a diagram for describing an improvement of ROT on the decoder side.
Fig. 8 is a flowchart for describing the processes of the encoder.
Fig. 9 is a flowchart for describing the processes of the encoder.
Fig. 10 is a flowchart for describing the processes of the encoder.
Fig. 11 is a flowchart for describing the processes of the encoder.
Fig. 12 is a flowchart for describing the processes of the encoder.
Fig. 13 is a flowchart for describing the processes of the decoder.
Fig. 14 is a flowchart for describing the processes of the decoder.
Fig. 15 is a flowchart for describing the processes of the decoder.

Fig. 16 is a block diagram illustrating a configuration example of an embodiment of a computer to which the present technology is applied.

MODE FOR CARRYING OUT THE INVENTION

<Embodiment>

[Configuration Example of Encoder]

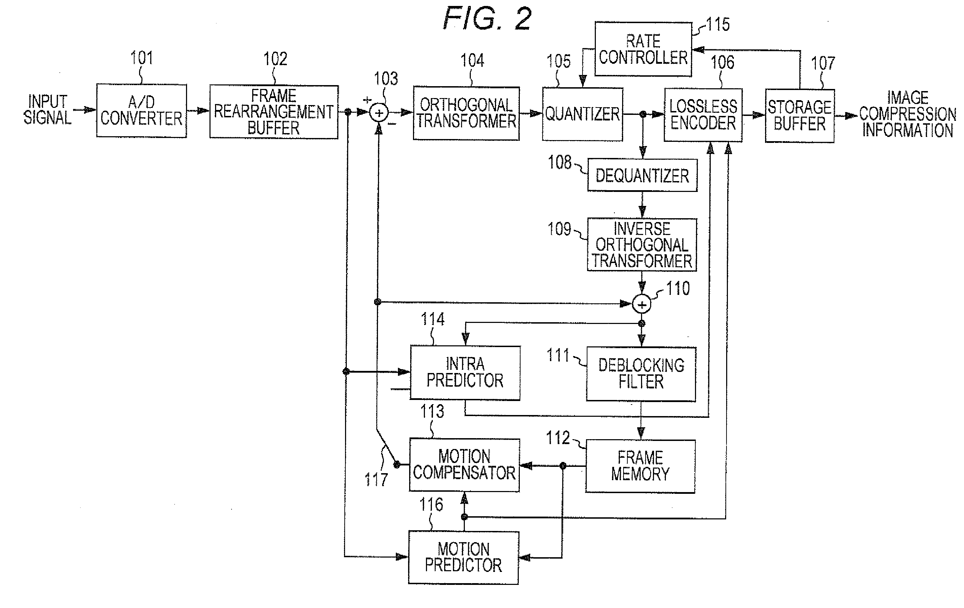

Fig. 2 is a block diagram illustrating a configuration example of an embodiment of an AVC encoder to which the present technology is applied.

The encoder of Fig. 2 includes an A/D converter 101, a frame rearrangement buffer 102, a computing device 103, an orthogonal transformer 104, a quantizer 105, a lossless encoder 106, a storage buffer 107, a dequantizer 108, an inverse orthogonal transformer 109, an adder 110, a deblocking filter 111, a frame memory 112, a motion compensator 113, an intra predictor 114, a rate controller 115, a motion predictor 116, and a selector 117. The encoder of Fig. 1 compresses and encodes an input image according to the AVC scheme.

Specifically, the A/D converter 101 of the encoder performs A/D conversion on a frame-based image input as an input signal to obtain digital image data and outputs the digital image data to the frame rearrangement buffer 102 which stores the digital image data. The frame rearrangement buffer 102 rearranges the frames of the image arranged in the stored order for display according to a group of picture (GOP) structure, in the order for encoding.

The computing device 103 subtracts a prediction image supplied from the selector 117 from the image read from the frame rearrangement buffer 102 as necessary. The computing device 103 outputs an image obtained as a result of the subtraction to the orthogonal transformer 104 as residual information. When the prediction image is not supplied from the selector 117, the computing device 103 outputs the image read from the frame rearrangement buffer 102 to the orthogonal transformer 104 as residual information without any change.

The orthogonal transformer 104 performs an orthogonal transform corresponding to a block size on the residual information from the computing device 103. Specifically, when the block size is $4 \times 4$ pixels, the orthogonal transformer 104 performs a combined transform of DCT and ROT on the residual information. On the other hand, when the block size is $8 \times 8$ pixels, the orthogonal transformer 104 performs DCT on the residual information and performs ROT on coefficients obtained as a result of the DCT. Moreover, when the block size is larger than 8x8 pixels, the orthogonal transformer 104 performs DCT on the residual information, performs ROT on a low frequency component of 8x8 pixels among the coefficients obtained as a result of the DCT, and uses the coefficients obtained as a result of the ROT and a remaining high frequency component as final coefficients. The orthogonal transformer 104 supplies coefficients obtained as a result of the orthogonal transform to the quantizer 105.

The quantizer 105 quantizes the coefficients supplied from the orthogonal transformer 104. The quantized coefficients are input to the lossless encoder 106.

The lossless encoder 106 acquires information (hereinafter referred to as intra prediction mode information) that indicates an optimal intra prediction mode from the intra predictor 114 and acquires information (hereinafter referred to as inter prediction mode information) that indicates an optimal inter prediction mode, motion vector information, and the like from the motion predictor 116.

The lossless encoder 106 performs lossless encoding such as variable length coding (for example, Context-Adaptive Variable Length Coding (CAVLC)) or arithmetic coding (for example, Context-Adaptive Binary Arithmetic Coding (CABAC)) on the quantized coefficients supplied from the quantizer 105 to obtain information obtained as a result of the encoding as a compressed image. Moreover, the lossless encoder 106 performs lossless encoding on the intra prediction mode information, the inter prediction mode information, the motion vector information, and the like to obtain information obtained as a result of the encoding as header information that is added to the compressed image. The lossless encoder 106 supplies the compressed image to which the header information obtained as a result of the lossless encoding is added to the storage buffer 107 as image compression information.

The storage buffer 107 temporarily stores the image compression information supplied from the lossless encoder 106 and outputs the image compression information to a recording device (not illustrated), a transmission path (not illustrated), or the like which is on the downstream side, for example.

Moreover, the quantized coefficients output from the quantizer 105 are also input to the dequantizer 108 and dequantized by the dequantizer 108 and are supplied to the inverse orthogonal transformer 109.

The inverse orthogonal transformer 109 performs an inverse orthogonal transform corresponding to a block size on the coefficients supplied from the dequantizer 108. Specifically, when the block size is $4 \times 4$ pixels, the inverse orthogonal transformer 109 performs a combined transform of inverse ROT and inverse DCT on the coefficients. On the other hand, when the block size is $8 \times 8$ pixels, the inverse orthogonal transformer 109 performs inverse ROT on the coefficients and performs inverse DCT on the coefficients obtained as a result of the inverse ROT. Moreover, when the block size is larger than 8×8 pixels, the inverse orthogonal transformer 109 performs inverse ROT on an 8×8 low frequency component of the coefficients and performs inverse DCT on the coefficients obtained as a result of the inverse ROT and the remaining high frequency component. The inverse orthogonal transformer 109 supplies the residual information obtained as a result of the inverse orthogonal transform to the adder 110.

The adder 110 adds the residual information supplied from the inverse orthogonal transformer 109 to the prediction image supplied from the intra predictor 114 or the motion compensator 113 as necessary and obtains a locally decoded image. The adder 110 supplies the obtained image to the deblocking filter 111 and supplies the obtained image to the intra predictor 114 as a reference image.

The deblocking filter 111 performs filtering on the locally decoded image supplied from the adder 110 to thereby remove a block distortion. The deblocking filter 111 supplies the image obtained as a result of the filtering to the frame memory 112, which stores the image. The image stored in the frame memory 112 is output to the motion compensator 113 and the motion predictor 116 as a reference image.

The motion compensator 113 performs a compensation process on the reference image supplied from the frame memory 112 based on the motion vector and the inter prediction mode information supplied from the motion predictor 116 to generate a prediction image. The motion compensator 113 supplies a cost function value (details of which will be described later) supplied from the motion predictor 116 and the generated prediction image to the selector 117.

The cost function value is also referred to as a Rate Distortion (RD) cost, and is calculated based on a High Complexity mode or a Low Complexity mode as defined in Joint Model (JM) which is reference software of the AVC scheme, for example.

Specifically, when the High Complexity mode is used as a method of calculating the cost function value, processes up to lossless encoding are temporarily performed on all candidate prediction modes, and a cost function value expressed by Expression (1) below is calculated for each prediction mode.

$$\mathtt{Cost(Mode)}\ =\ \mathtt{D}\ +\ \lambda\cdot\mathtt{R}\ \dots\ \mathtt{(1)}$$

Here, "D" is a difference (distortion) between an original image and a decoded image, "R" is an occurrence coding rate including the orthogonal transform coefficients, and "λ" is the Lagrange's multiplier given as a function of a quantization parameter QP.

On the other hand, when the Low Complexity mode is used as a method of calculating the cost function value, generation of a decoded image and calculation of a header bit such as information that indicates a prediction mode are performed on all candidate prediction modes, and a cost function expressed by Expression (2) below is calculated for each prediction mode.

$$\mathtt{Cost(Mode)}\ =\ \mathtt{D}\ +\ \mathtt{QPtoQuant(QP)\cdot Header\_Bit}\ \dots\ \mathtt{(2)}$$

Here, "D" is a difference (distortion) between an original image and a decoded image, "Header_Bit" is header bit of a prediction mode, and "QPtoQuant" is a function given as a function of a quantization parameter QP.

In the Low Complexity mode, since it is only necessary to generate a decoded image in all prediction modes, and it is not necessary to perform lossless encoding, a small amount of computation is required. In this example, it is assumed that the High Complexity mode is used as the method of calculating the cost function value.

The intra predictor 114 performs an intra prediction process in all candidate intra prediction modes in units of blocks of all candidate block sizes based on the image read from the frame rearrangement buffer 102 and the reference image supplied from the adder 110 to generate a prediction image.

Moreover, the intra predictor 114 calculates the cost function value for all candidate intra prediction modes and all candidate block sizes. Moreover, the intra predictor 114 determines a combination of an intra prediction mode and a block size in which the cost function value is smallest as an optimal intra prediction mode. The intra predictor 114 supplies the prediction image generated in the optimal intra prediction mode and the corresponding cost function value to the selector 117. When selection of a prediction image generated in the optimal intra prediction mode is notified from the selector 117, the intra predictor 114 supplies the intra prediction mode information to the lossless encoder 106.

The motion predictor 116 performs motion prediction in all candidate inter prediction modes based on the image supplied from the frame rearrangement buffer 102 and the reference image supplied from the frame memory 112 to generate a motion vector. In this case, the motion predictor 116 calculates a cost function value in all candidate inter prediction modes and determines an inter prediction mode in which the cost function value is smallest as an optimal inter prediction mode. Moreover, the motion predictor 116 supplies the inter prediction mode information and the corresponding motion vector and cost function value to the motion compensator 113. When selection of a prediction image generated in the optimal inter prediction mode is notified from the selector 117, the motion predictor 116 outputs the inter prediction mode information, information on the corresponding motion vector, and the like to the lossless encoder 106.

The selector 117 determines any one of the optimal intra prediction mode and the optimal inter prediction mode as an optimal prediction mode based on the cost function value supplied from the intra predictor 114 and the motion compensator 113. Moreover, the selector 117 supplies the prediction image in the optimal prediction mode to the computing device 103 and the adder 110. Moreover, the selector 117 notifies selection of the prediction image in the optimal prediction mode to the intra predictor 114 or the motion predictor 116.

The rate controller 115 controls the rate of the quantization operation of the quantizer 105 based on the image compression information stored in the storage buffer 107 so that an overflow or an underflow does not occur.

[Configuration Example of Decoder]

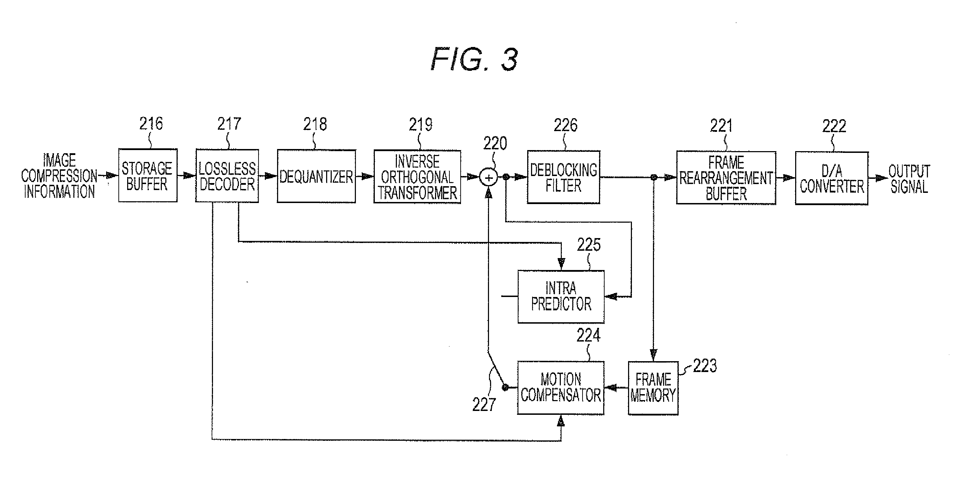

Fig. 3 is a block diagram of an AVC decoder corresponding to the encoder of Fig. 2.

The decoder of Fig. 3 includes a storage buffer 216, a lossless decoder 217, a dequantizer 218, an inverse orthogonal transformer 219, an adder 220, a frame rearrangement buffer 221, a D/A converter 222, a frame memory 223, a motion compensator 224, an intra predictor 225, a deblocking filter 226, and a switch 227.

The storage buffer 216 stores the image compression information transmitted from the encoder of Fig. 2. The lossless decoder 217 reads and acquires the image compression information from the storage buffer 216 and losslessly decodes the image compression information according to a scheme corresponding to the lossless encoding scheme of the lossless encoder 106 of Fig. 2.

Specifically, the lossless decoder 217 losslessly decodes the header information in the image compression information to acquire the intra prediction mode information, the inter prediction mode information, the motion vector information, and the like. Moreover, the lossless decoder 217 losslessly decodes the compressed image in the image compression information.

Moreover, the lossless decoder 217 supplies quantized coefficients obtained as a result of lossless decoding of the compressed image to the dequantizer 218. The lossless decoder 217 supplies the intra prediction mode information obtained as a result of the lossless decoding to the intra predictor 225 and supplies the inter prediction mode information, the motion vector information, and the like to the motion compensator 224.

The dequantizer 218 has the same configuration as the dequantizer 108 of Fig. 2 and dequantizes the quantized coefficients supplied from the lossless decoder 217 according to a scheme corresponding to the quantization scheme of the quantizer 105 of Fig. 2. The dequantizer 218 supplies the coefficients obtained as a result of the dequantization to the inverse orthogonal transformer 219.

The inverse orthogonal transformer 219 performs an inverse orthogonal transform corresponding to a block size on the coefficients supplied from the dequantizer 218 in a manner similarly to the inverse orthogonal transformer 109 of Fig. 2. The inverse orthogonal transformer 219 supplies the residual information obtained as a result of the inverse orthogonal transform to the adder 220.

The adder 220 adds the residual information supplied from the inverse orthogonal transformer 219 to the prediction image supplied from the switch 227 and decodes the added result as necessary. The adder 220 supplies a decoded image obtained as a result of the decoding to the intra predictor 225 and the deblocking filter 226.

The deblocking filter 226 performs filtering on the decoded image supplied from the adder 220 to thereby remove a block distortion. The deblocking filter 226 supplies an image obtained as a result of the filtering to the frame memory 223, which stores the image, and outputs the image to the frame rearrangement buffer 221.

The frame rearrangement buffer 221 rearranges the image supplied from the deblocking filter 226. Specifically, the order of frames of the image arranged for encoding by the frame rearrangement buffer 102 of Fig. 2 is rearranged to the original display order. The D/A converter 222 performs D/A conversion on the image rearranged by the frame rearrangement buffer 221 and outputs the converted image to a display (not illustrated), which displays the image.

The frame memory 223 reads the image stored therein as a reference image and outputs the reference image to the motion compensator 224.

The intra predictor 225 performs an intra prediction process in the optimal intra prediction mode indicated by the intra prediction mode information based on the intra prediction mode information supplied from the lossless decoder 217 to generate a prediction image. The intra predictor 225 supplies the prediction image to the switch 227.

The motion compensator 224 performs a motion compensation process on the reference image supplied from the frame memory 223 based on the inter prediction mode information, the motion vector information, and the like supplied from the lossless decoder 217 to generate a prediction image. The motion compensator 224 supplies the prediction image to the switch 227.

The switch 227 selects the prediction image generated by the motion compensator 224 or the intra predictor 225 and supplies the selected prediction image to the adder 220.

Description of Orthogonal Transform and Inverse Orthogonal Transform

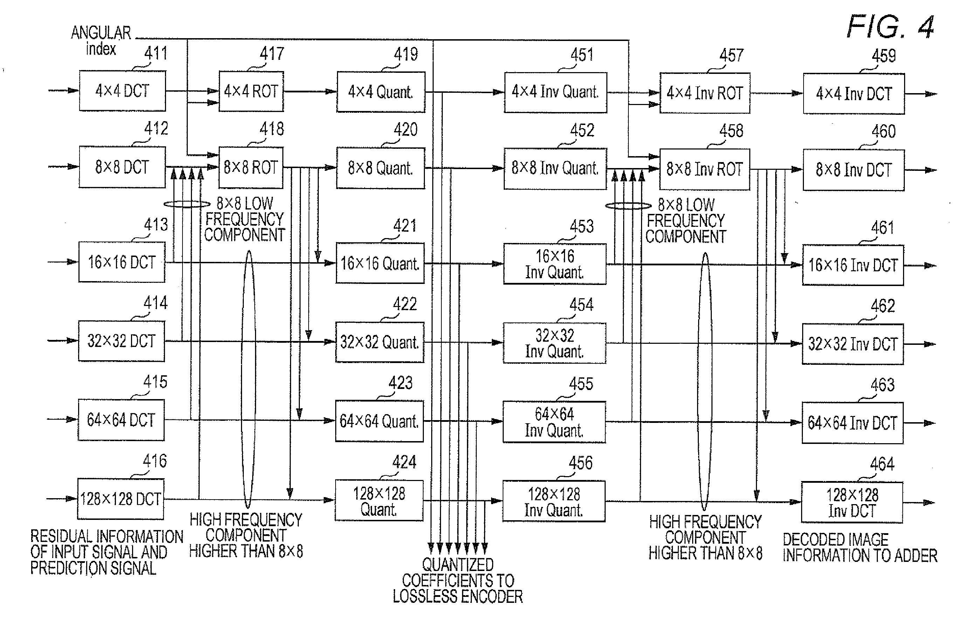

First, Fig. 4 is a block diagram illustrating an orthogonal transformer, a quantizer, a dequantizer, and an inverse orthogonal transformer of a conventional encoder when DCT and ROT are performed as an orthogonal transform.

As illustrated in Fig. 4, an orthogonal transformer of the conventional encoder includes a $4\times4$ DCT 411, an $8\times8$ DCT 412, a $16\times16$ DCT 413, a $32\times32$ DCT 414, a $64\times64$ DCT 415, a $128\times128$ DCT 416, a $4\times4$ ROT 417, and an $8\times8$ ROT 418.

The residual information is input to the $4\times4$ DCT 411, the $8\times8$ DCT 412, the $16\times16$ DCT 413, the $32\times32$ DCT 414, the $64\times64$ DCT 415, and the $128\times128$ DCT 416 according to the block size, and is subjected to DCT.

Specifically, the $4\times4$ DCT 411 performs DCT on the $4\times4$ pixel residual information, rounds off the computation accuracy of the $4\times4$ pixel coefficients obtained as a result of the DCT, and supplies the $4\times4$. pixel coefficients to the $4\times4$ ROT 417.

The $8\times8$ DCT 412 performs DCT on the $8\times8$ pixel residual information, rounds off the computation accuracy of the $8\times8$ pixel coefficients obtained as a result of the DCT, and supplies the $8\times8$ pixel coefficients to the $8\times8$ ROT 418. The $16\times16$ DCT 413 performs DCT on the $16\times16$ pixel residual information and rounds off the computation accuracy of the $16\times16$ pixel coefficients obtained as a result of the DCT. The $16\times16$ DCT 413 supplies an 8x8 pixel low frequency component among the $16\times16$ pixel coefficients obtained as a result of the DCT to the $8\times8$ ROT 418 and supplies the remaining high frequency component to the quantizer.

Similarly, the $32\times32$ DCT 414, the $64\times64$ DCT 415, and the $128\times128$ DCT 416 perform DCT on the $32\times32$, $64\times64$, and $128\times128$ pixel residual information, respectively, and round off the computation accuracy of the coefficients obtained as a result of the DCT. Moreover, the $32\times32$ DCT 414, the $64\times64$ DCT 415, and the $128\times128$ DCT 416 supplies only the $8\times8$ pixel low frequency component among the coefficients obtained as a result of the DCT to the 8x8 ROT 418 and supplies the remaining high frequency component to the quantizer.

The $4\times4$ ROT 417 performs ROT on the $4\times4$ pixel coefficients supplied from the $4\times4$ DCT 411 using an angular index.

Here, the ROT is a rotational transform that uses a rotation matrix $R_{vertical}$ for vertical direction and a rotation matrix $R_{horizontal}$ for horizontal direction illustrated in Expression (1) below, and the angular index is $\alpha_1$ to $\alpha_6$ in Expression (1).

[Mathematical Formula 1]

$$R_{vertical}(\alpha_1, \alpha_2, \alpha_3) = \begin{pmatrix} \cos\alpha_1\cos\alpha_3 - \sin\alpha_1\cos\alpha_2\sin\alpha_3 & -\sin\alpha_1\cos\alpha_3 - \cos\alpha_1\cos\alpha_2\sin\alpha_3 & \sin\alpha_2\sin\alpha_3 & 0 \\ \cos\alpha_1\sin\alpha_3 + \sin\alpha_1\cos\alpha_2\cos\alpha_3 & -\sin\alpha_1\sin\alpha_3 + \cos\alpha_1\cos\alpha_2\cos\alpha_3 & -\sin\alpha_2\cos\alpha_3 & 0 \\ \sin\alpha_1\sin\alpha_2 & \cos\alpha_1\sin\alpha_2 & \cos\alpha_2 & 0 \\ 0 & 0 & 0 & 1 \end{pmatrix}$$

$$R_{horizontal}(\alpha_4, \alpha_5, \alpha_6) = \begin{pmatrix} \cos\alpha_4\cos\alpha_6 - \sin\alpha_4\cos\alpha_5\sin\alpha_6 & -\sin\alpha_4\cos\alpha_6 - \cos\alpha_4\cos\alpha_5\sin\alpha_6 & \sin\alpha_5\sin\alpha_6 & 0 \\ \cos\alpha_4\sin\alpha_6 + \sin\alpha_4\cos\alpha_5\cos\alpha_6 & -\sin\alpha_4\sin\alpha_6 + \cos\alpha_4\cos\alpha_5\cos\alpha_6 & -\sin\alpha_5\cos\alpha_6 & 0 \\ \sin\alpha_4\sin\alpha_5 & \cos\alpha_4\sin\alpha_5 & \cos\alpha_5 & 0 \\ 0 & 0 & 0 & 1 \end{pmatrix}$$

$$\cdots(1)$$

The $8\times8$ ROT 418 performs ROT using an angular index. on the $8\times8$ pixel coefficients supplied from the 8x8 DCT 412, the $16\times16$ DCT 413, the $32\times32$ DCT 414, the $64\times64$ DCT 415, and the $128\times128$ DCT 416.

The $4\times4$ pixel coefficients obtained as a result of the ROT by the $4\times4$ ROT 417 and the $8\times8$ pixel coefficients obtained as a result of the ROT by the $8\times8$ ROT 418 are supplied to the quantizer with the computation accuracy rounded off.

The quantizer includes a 4×4 Quant 419, an 8×8 Quant 420, a 16×16 Quant 421, a 32×32 Quant 422, a 64×64 Quant 423, and a 128×128 Quant 424.

The 4×4 Quant 419 quantizes the 4×4 pixel coefficients supplied from the 4×4 ROT 417. The 4×4 Quant 419 supplies the quantized 4×4 pixel coefficients to the dequantizer and supplies the same to the same lossless encoder (not illustrated) as the lossless encoder 106 of Fig. 2.

The 8×8 Quant 420 quantizes the 8x8 pixel coefficients supplied from the 8×8 ROT 418. The 8×8 Quant 420 supplies the quantized 8×8 pixel coefficients to the dequantizer and supplies the same to the same lossless encoder (not illustrated) as the lossless encoder 106 of Fig. 2.

The 16×16 Quant 421 quantizes the 8×8 pixel coefficients supplied from the 8×8 ROT 418 and a high frequency component other than the 8×8 pixel low frequency component among the coefficients obtained as a result of the DCT on the 16×16 pixel residual information supplied from the 16×16 DCT 413. The 16×16 Quant 421 supplies the quantized 16×16 pixel coefficients to the dequantizer and supplies the same to the same lossless encoder (not illustrated) as the lossless encoder 106.

Similarly, the 32×32 Quant 422, the 64×64 Quant 423, and the 128×128 Quant 424 quantize the 8×8 pixel coefficients supplied from the 8×8 ROT 418 and a high frequency component other than the 8×8 pixel low frequency component among the coefficients obtained as a result of the DCT on the 32×32, 64×64, and 128×128 pixel residual information. The 32×32 Quant 422, the 64×64 Quant 423, and the 128×128 Quant 424 supply the quantized 32×32, 64×64, and 128×128 pixel coefficients to the dequantizer and supply the same to the same lossless encoder (not illustrated) as the lossless encoder 106.

The dequantizer includes a 4x4 Inv Quant 451, an 8x8 Inv Quant 452, a 16×16 Inv Quant 453, a 32×32 Inv Quant 454, a 64×64 Inv Quant 455, and a 128×128 Inv Quant 456.

The 4×4 Inv Quant 451, the 8×8 Inv Quant 452, the 16×16 Inv Quant 453, the 32×32 Inv Quant 454, the 64×64 Inv Quant 455, and the 128×128 Inv Quant 456 dequantize the quantized coefficients supplied from the 4×4 Quant 419, the 8×8 Quant 420, the 16×16 Quant 421, the 32×32 Quant 422, the 64×64 Quant 423, and the 128×128 Quant 424 respectively, and supply the dequantized coefficients to the inverse orthogonal transformer.

The inverse orthogonal transformer includes a 4×4 Inv ROT 457, an 8×8 Inv ROT 458, a 4×4 Inv DCT 459, an 8×8 Inv DCT 460, a 16×16 Inv DCT 461, a 32×32 Inv DCT 462, a 64×64 Inv DCT 463, and a 128×128 Inv DCT 464.

The 4×4 Inv ROT 457 performs inverse ROT on the dequantized 4×4 pixel coefficients supplied from the 4×4 Inv Quant 451 using an angular index. The 4×4 Inv ROT 457 supplies the 4×4 pixel coefficients obtained as a result of the inverse ROT to the 4×4 Inv DCT 459.

The 8×8 Inv ROT 458 performs inverse ROT on the dequantized 8×8 pixel coefficients supplied from the 8×8 Inv Quant 452 using an angular index and supplies the 8×8 pixel coefficients obtained as a result of the inverse ROT to the 8×8 Inv DCT 460.

Moreover, the 8×8 Inv ROT 458 performs inverse ROT on the 8×8 pixel low frequency component among the dequantized 16×16 pixel coefficients supplied from the 16×16 Inv Quant 453 using an angular index. Moreover, the 8×8 Inv ROT 458 supplies the 8×8 pixel coefficients obtained as a result of the inverse ROT to the 16×16 Inv DCT 461.

Similarly, the 8×8 Inv ROT 458 performs inverse ROT on the 8×8 pixel low frequency component among the dequantized 32×32, 64×64, and 128×128 pixel coefficients supplied from the 32×32 Inv Quant 454, the 64×64 Inv Quant 455, and the 128×128 Inv Quant 456, respectively, using an angular index. Moreover, the 8×8 Inv ROT 458 supplies the 8×8 pixel coefficients obtained as a result of the inverse ROT on the 8x8 pixel low frequency component among the dequantized 32×32, 64×64, and 128×128 pixel coefficients to the 32×32 Inv DCT 462, the 64×64 Inv DCT 463, and the 128×128 Inv DCT 464, respectively.

The 4×4 Inv DCT 459 performs inverse DCT on the 4×4 pixel coefficients supplied from the 4×4 Inv Rot 457. The 4×4 Inv DCT 459 supplies the 4×4 pixel residual information obtained as a result of the inverse DCT to the same adder (not illustrated) as the adder 110 of Fig. 2.

The 8×8 Inv DCT 460 performs inverse DCT on the 8×8 pixel coefficients supplied from the 8×8 Inv Rot 458. The 8×8 Inv DCT 460 supplies the 8×8 pixel residual information obtained as a result of the inverse DCT to the same adder (not illustrated) as the adder 110. The 16×16 Inv DCT 461 performs inverse DCT on the 8×8 pixel coefficients supplied from the 8×8 Inv Rot 458 and a high frequency component other than the 8×8 pixel low frequency component among the 16×16 pixel coefficients supplied from the 16×16 Inv Quant 453. The 16×16 Inv DCT 461 supplies the 16×16 pixel residual information obtained as a result of the inverse DCT to the same adder (not illustrated) as the adder 110.

Similarly, the 32×32 Inv DCT 462, the 64×64 Inv DCT 463, and the 128×128:Inv DCT 464 perform inverse. DCT on the 8×8 pixel coefficients supplied from the 8×8 Inv Rot 458 and the high frequency component other than the 8×8 pixel low frequency component among the coefficients supplied from the 32×32 Inv Quant 454, the 64×64 Inv Quant 455, and the 128×128 Inv Quant 456. The 32×32 Inv DCT 462, the 64×64 Inv DCT 463, and the 128×128 Inv DCT 464 supply the 32x32, 64×64, and 128×128 pixel residual information obtained as a result of the inverse DCT to the same adder (not illustrated) as the adder 110.

In this way, the residual information is input to the adder (not illustrated), whereby a decoded image is obtained.

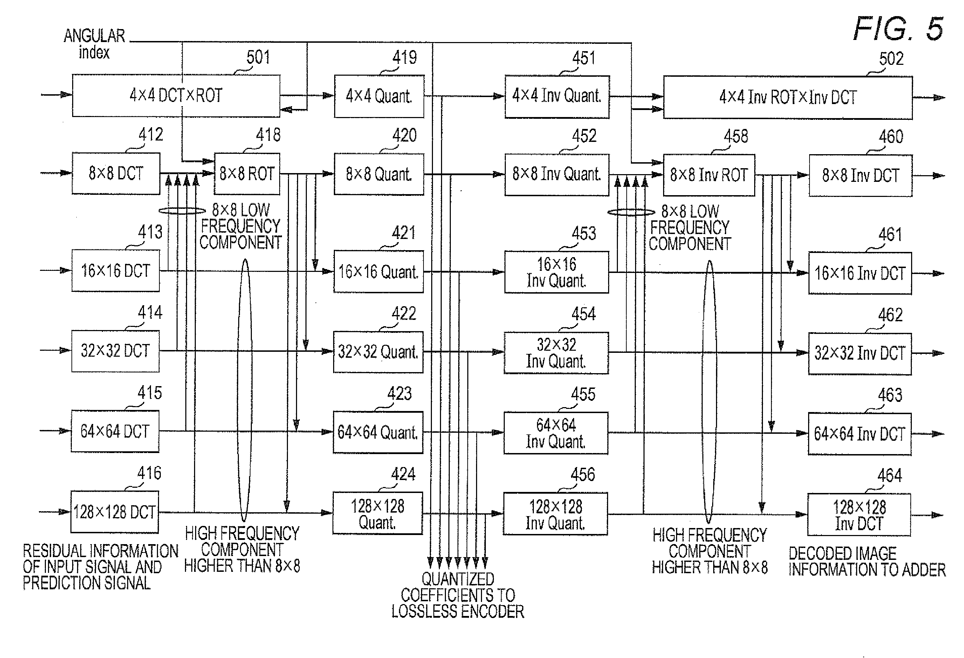

Next, Fig. 5 is a block diagram illustrating the details of the orthogonal transformer 104, the quantizer 105, the dequantizer 108, and the inverse orthogonal transformer 109 of the encoder of Fig. 2.

Among the configurations illustrated in Fig. 5, the same configurations as the configurations of Fig. 4 are denoted by the same reference numerals. Redundant description thereof will be appropriately not provided.

The configuration of Fig. 5 is mainly different from the configuration of Fig. 4, in that a 4×4 DCT×ROT 501 is provided instead of the 4×4 DCT 411 and the 4×4 ROT 417 of the orthogonal transformer 104, and that a 4×4 Inv ROT×Inv DCT 502 is provided instead of the 4×4 Inv ROT 457 and the 4×4 Inv DCT 459 of the inverse orthogonal transformer 109.

The 4×4 DCT×ROT 501 of the orthogonal transformer 104 performs a combined transform of DCT and ROT on the 4×4 pixel residual information supplied from the computing device 103 of Fig. 2 using an angular index. Specifically, the 4×4 DCT×ROT 501 is provided with a matrix for a combined transform of DCT and ROT corresponding to an angular index, and the 4×4 DCT×ROT 501 obtains 4×4 pixel coefficients after DCT and ROT through one transform using the matrix. The 4×4 DCT×ROT 501 supplies the 4×4 pixel coefficients to the 4×4 Quant 419 with the computation accuracy rounded off.

The DCT and ROT are one kind of orthogonal transform and are generally performed by a matrix operation. Thus, a matrix for a combined transform of DCT and ROT is a matrix obtained by the product of the matrix used in the matrix operation of DCT and the matrix used in the matrix operation of ROT.

As described above, in the orthogonal transformer 104, since DCT and ROT can be performed through one transform on the 4×4 pixel residual information, it is possible to reduce the amount of computation required for the orthogonal transform as compared to the orthogonal transformer of Fig. 4. Moreover, since the rounding of the computation accuracy after DCT is not necessary, it is possible to increase the computation accuracy as compared to the orthogonal transformer of Fig. 4. Thus, the output of the 4×4 ROT 417 of Fig. 4 is not the same as the output of the 4×4 DCT×ROT 501 of Fig. 5.

Moreover, the 4×4 Inv ROT×Inv DCT 502 of the inverse orthogonal transformer 109 performs a combined transform of inverse DCT and inverse ROT on the 4×4 pixel coefficients supplied from the 4×4 Inv Quant 451 using an angular index. Specifically, the 4×4 Inv ROT×Inv DCT 502 is provided with a matrix for a combined transform of inverse DCT and inverse ROT corresponding to an angular index, and the 4×4 Inv ROT×Inv DCT 502 obtains 4×4 pixel residual information after inverse DCT and inverse ROT through one transform using the matrix. The combined transform of inverse DCT and inverse ROT is an inverse transform of the transform performed by the 4×4 DCT×ROT 501. The 4×4 Inv ROT×Inv DCT 502 supplies the 4×4 pixel residual information obtained as a result of the transform to the adder 110 of Fig. 2.

As described above, in the inverse orthogonal transformer 109, since inverse DCT and inverse ROT can be performed through one transform on the 4×4 pixel coefficients, it is possible to reduce the amount of computation required for the inverse orthogonal transform as compared to the inverse orthogonal transformer of Fig. 4. Moreover, since the rounding of the computation accuracy after inverse ROT is not necessary, it is possible to increase the computation accuracy as compared to the inverse orthogonal transformer of Fig. 4. Thus, the output of the 4×4 Inv DCT 459 of Fig. 4 is not the same as the output of the 4×4 Inv ROTxInv DCT 502 of Fig. 5.

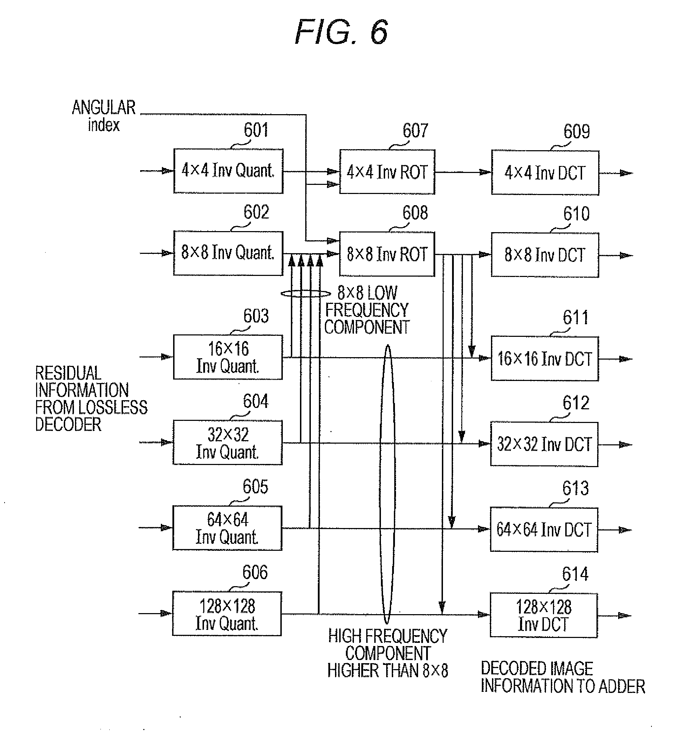

Next, Fig. 6 is a block diagram illustrating a dequantizer and an inverse orthogonal transformer of the conventional decoder when DCT and ROT are performed as an orthogonal transform.

The dequantizer of the conventional decoder of Fig. 6 has the same configuration as the dequantizer of Fig. 4, and the inverse orthogonal transformer of Fig. 6 has the same configuration as the inverse orthogonal transformer of Fig. 4.

Specifically, the dequantizer of Fig. 6 includes a 4×4 Inv Quant 601, an 8×8 Inv Quant 602, a 16×16 Inv Quant 603, a 32×32 Inv Quant 604, a 64×64 Inv Quant 605, and a 128×128 Inv Quant 606. The 4×4 Inv Quant 601, the 8×8 Inv Quant 602, the 16×16 Inv Quant 603, the 32×32 Inv Quant 604, the 64×64 Inv Quant 605, and the 128×128 Inv Quant 606 perform dequantization on the quantized coefficients obtained as a result of lossless decoding of the losslessly encoded image compression information transmitted from the encoder in a manner similarly to the dequantizer of Fig. 4

Moreover, the inverse orthogonal transformer of Fig. 6 includes a 4×4 Inv ROT 607, an 8×8 Inv ROT 608, a 4×4 Inv DCT 609, an 8×8 Inv DCT 610, a 16×16 Inv DCT 611, a 32×32 Inv DCT 612, a 64×64 Inv DCT 613, and a 128×128 Inv DCT 614. The 4×4 Inv ROT 607 and the 8x8 Inv ROT 608 perform inverse ROT in a manner similarly to the 4×4 Inv ROT 457 and the 8×8 Inv ROT 458 of Fig. 4, respectively. Moreover, the 4×4 Inv DCT 609, the 8×8 Inv DCT 610, the 16×16 Inv DCT 611, the 32×32 Inv DCT 612, the 64×64 Inv DCT 613, and the 128×128 Inv DCT 614 perform inverse DCT in a manner similarly to the Inv DCTs of the corresponding block sizes of Fig. 4, respectively.

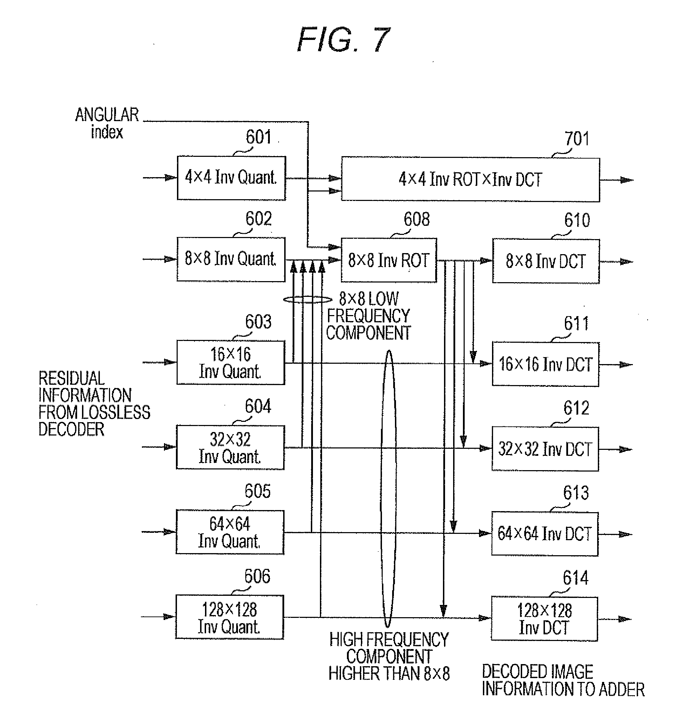

Next, Fig. 7 is a block diagram illustrating the details of the dequantizer 218 and the inverse orthogonal transformer 219 of the decoder of Fig. 3.

The dequantizer 218 of Fig. 7 has the same configuration as the dequantizer 108 of Fig. 5, and the inverse orthogonal transformer 219 of Fig. 7 has the same configuration as the inverse orthogonal transformer 109 of Fig. 5.

Among the configurations illustrated in Fig. 7 the same configurations as the configurations of Fig. 6 are denoted by the same reference numerals. Redundant description thereof will be appropriately not provided.

The configuration of Fig. 7 is mainly different from the configuration of Fig. 6, in that a 4×4 Inv ROT×Inv DCT 701 is provided instead of the 4×4 Inv ROT 607 and the 4×4 Inv DCT 609 of the inverse orthogonal transformer 219 similarly to the inverse orthogonal transformer 109.

The 4x4 Inv ROT×Inv DCT 701 of the inverse orthogonal transformer 219 performs a combined transform of inverse DCT and inverse ROT on the 4×4 pixel coefficients supplied from the 4×4 Inv Quant 601 using an angular index in a manner similarly to the 4x4 Inv ROT×Inv DCT 502 of Fig. 5. The 4×4 Inv ROT×Inv DCT 701 supplies the 4×4 pixel residual information obtained as a result of the transform to the adder 220 of Fig. 3.

The angular index is determined by the encoder, for example, and is included in the header information by the lossless encoder 106 and transmitted to the decoder.

In the present embodiment, although the DCT and ROT on the 4×4 pixel residual information are performed through one transform, the DCT and ROT on the 8×8 pixel residual information as well as the 4×4 pixel residual information may be performed through one transform. The same is true for the inverse DCT and inverse ROT.

Moreover, in the present embodiment, although the ROT is performed on only the low frequency component of the 8×8 pixels among the coefficients having a size of 8×8 pixels or larger obtained as a result of the DCT, the maximum size of the coefficients subjected to the ROT may be different from the size of 8×8 pixels (for example, 4×4 pixels, 16×16 pixels, or the like). The same is true for the inverse ROT.

Description of Encoder Processing

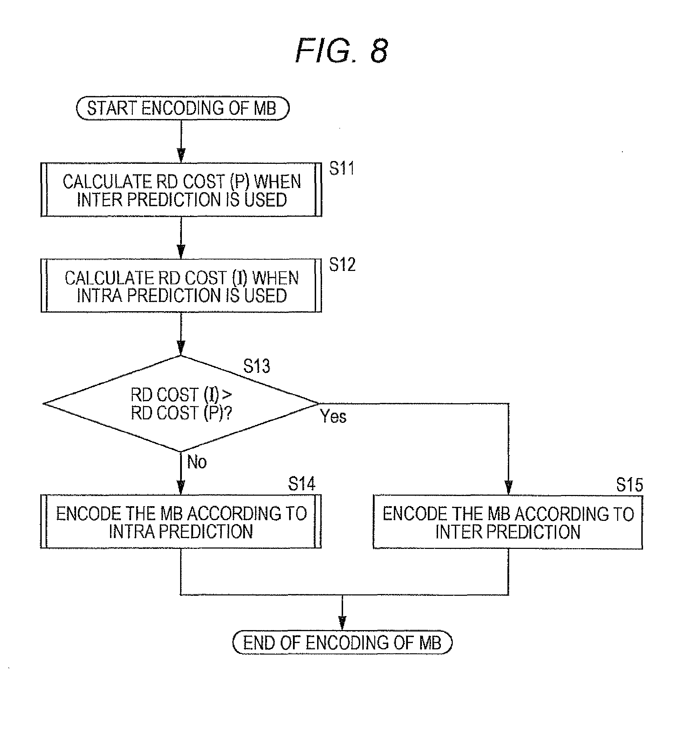

Figs. 8, 9, 10, 11, and 12 are flowcharts of the processing of the encoder of Fig. 2.

Fig. 8 is a flowchart for describing a macroblock (MB) encoding process.

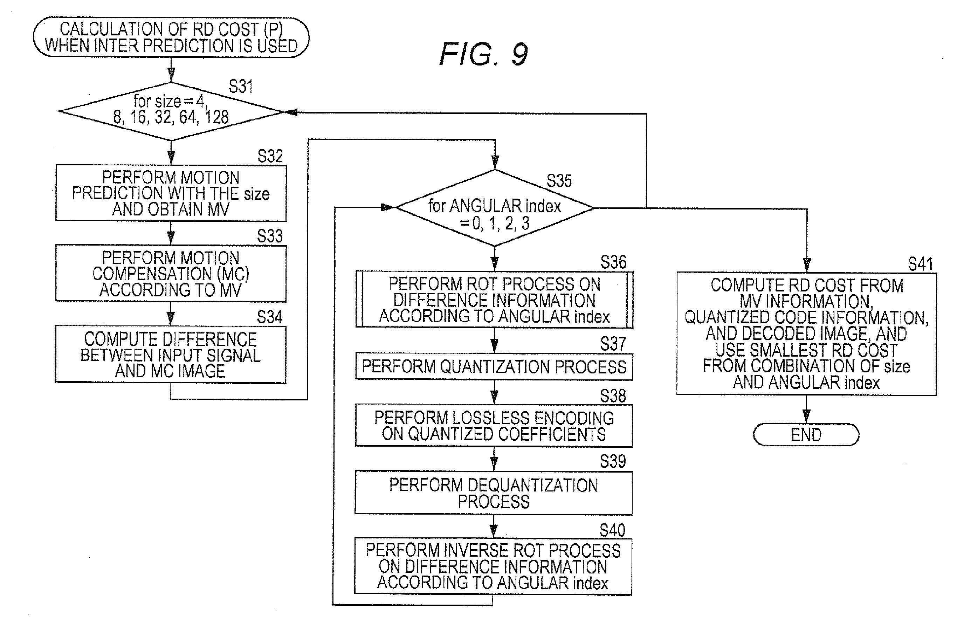

In step S11 of Fig. 8, the encoder calculates a RD cost (P) when inter prediction is used. The details of the process of calculating a RD cost (P) when inter prediction is used will be described with reference to Fig. 9 described later.

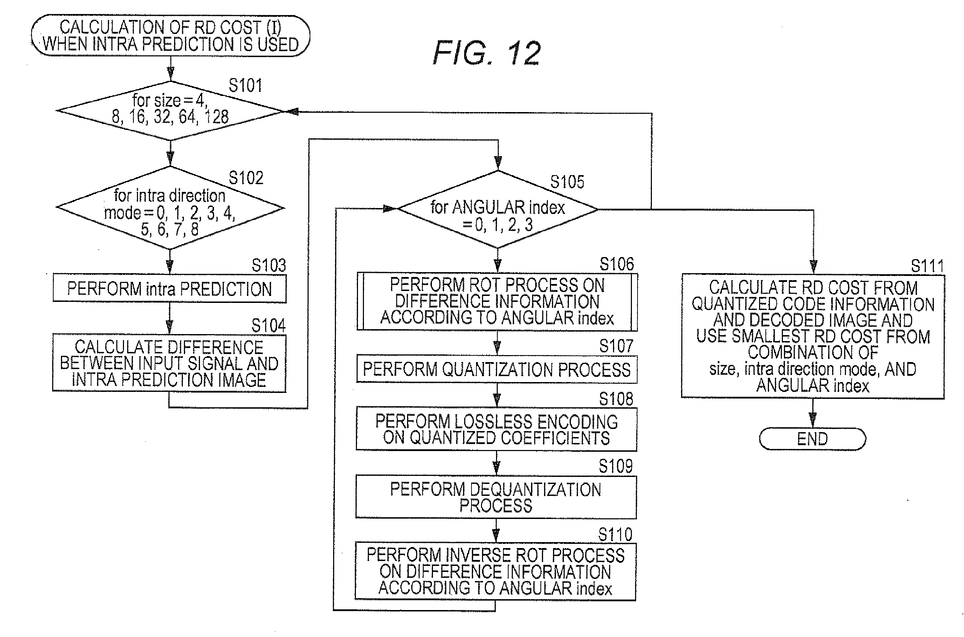

In step S12, the encoder calculates a RD cost (I) when an intra prediction is used. The details of the process of calculating a RD cost (I) when intra prediction is used will be described with reference to Fig. 12 described later.

In step S13, the selector 117 determines whether the RD cost (I) is larger than the RD cost (P).

When it is determined in step S13 that the RD cost (I) is not larger than the RD cost (P), that is, when the RD cost (I) is equal to or smaller than the RD cost (P), the selector 117 determines an optimal intra prediction mode as an optimal prediction mode. Moreover, the selector 117 supplies the prediction image in the optimal intra prediction mode to the computing device 103 and the adder 110. Moreover, the selector 117 notifies the selection of the prediction image in the optimal intra prediction mode to the intra predictor 114. In this way, the intra predictor 114 supplies the intra prediction mode information to the lossless encoder 106.

In step S14, the encoder encodes a current macroblock (the MB) according to intra prediction in the optimal intra prediction mode. Specifically, the computing device 103 of the encoder subtracts the prediction image supplied from the selector 117 from the current macroblock of the image read from the frame rearrangement buffer 102, and the orthogonal transformer 104 performs orthogonal transform on the residual information obtained as a result of the subtraction. The quantizer 105 quantizes the coefficients obtained as a result of the orthogonal transform of the orthogonal transformer 104, and the lossless encoder 106 losslessly encodes the quantized coefficients and losslessly encodes the intra prediction mode information or the like to be used as the header information. The storage buffer 107 temporarily stores the compressed image, in which the header information obtained as a result of the lossless encoding is added, as the image compression information, and outputs the image compression information.

On the other hand, when it is determined in step S13 that the RD cost (1) is larger than the RD cost (P), the selector 117 determines the optimal inter prediction mode as an optimal prediction mode. Moreover, the selector 117 supplies the prediction image in the optimal inter prediction mode to the computing device 103 and the adder 110. Moreover, the selector 117 notifies the selection of the prediction image in the optimal inter prediction mode to the motion predictor 116. In this way, the motion predictor 116 outputs the inter prediction mode information, the corresponding motion vector information, and the like to the lossless encoder 106.

In step S15, the encoder encodes a current macroblock according to inter prediction in the optimal inter prediction mode. Specifically, the computing device 103 of the encoder subtracts the prediction image supplied from the selector 117 from the current macroblock of the image read from the frame rearrangement buffer 102, and the orthogonal transformer 104 performs orthogonal transform on the residual information obtained as a result of the subtraction. The quantizer 105 quantizes the coefficients obtained as a result of the orthogonal transform of the orthogonal transformer 104, and the lossless encoder 106 losslessly encodes the quantized coefficients and losslessly encodes the inter prediction mode information, the motion vector information, and the like to be used as the header information. The storage buffer 107 temporarily stores the compressed image in which the header information obtained as a result of the lossless encoding as the image compression information and outputs the image compression information.

Fig. 9 is a flowchart for describing the details of the process of calculating a RD cost (P) when the inter prediction of step S11 of Fig. 8 is used.

In step S31 of Fig. 9, the motion predictor 116 sets the block size of the inter prediction to one which has not been set among the 4×4, 8×8, 16×16, 32×32, 64×64, and 128×128 pixels corresponding to the respective inter prediction modes.

In step S32, the motion predictor 116 performs motion prediction with the size set in step S31. Specifically, the motion predictor 116 performs motion prediction in respective blocks of the size set in step S31 using the image supplied from the frame rearrangement buffer 102 and the reference image supplied from the frame memory 112. As a result, motion vectors (MV) for respective blocks are obtained. The motion predictor 116. supplies the motion vector to the motion compensator 113.

In step S33, the motion compensator 113 performs motion compensation (MC) according to the motion vector supplied from the motion predictor 116. Specifically, the motion compensator 113 generates a prediction image from the reference image supplied from the frame memory 112 according to the motion vector. The motion compensator 113 supplies the generated prediction image to the computing device 103 via the selector 117.

In step S34, the computing device 103 computes a difference between the image corresponding to the input signal and the MC image (prediction image). The computing device 103 supplies the difference obtained as a result of the computation to the orthogonal transformer 104 as residual information.

In step S35, the orthogonal transformer 104 sets the angular index to one which has not been set among the angular indices of index numbers 0, 1, 2, and 3. The index number is a number unique to the combination of the angular indices $\alpha_1$ to $\alpha_6$, and in the present embodiment, a combination of four angular indices of the numbers 0 to 3 is prepared.

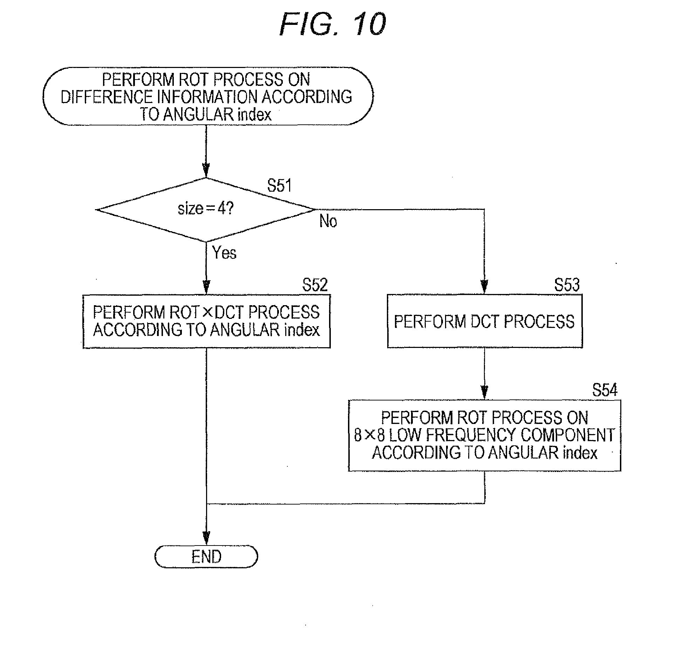

In step S36, the orthogonal transformer 104 performs a ROT process or the like which is a process of performing ROT according to an angular index with respect to the residual information (difference information) supplied from the computing device 103. The details of the process of step S36 will be described with reference to Fig. 10 described later.

In step S37, the quantizer 105 performs a quantization process which is a process of quantizing the coefficients obtained as a result of the ROT process or the like in step S36. Specifically, the 4×4 Quant 419, the 8×8 Quant 420, the 16×16 Quant 421, the 32×32 Quant 422, the 64×64 Quant 423, or the 128×128 Quant 424 corresponding to the block size of the inter prediction of the quantizer 105 quantizes the coefficients supplied from the orthogonal transformer 104. The quantizer 105 supplies the coefficients obtained as a result of the quantization process to the lossless encoder 106 and the dequantizer 108.

In step S38, the lossless encoder 106 losslessly encodes the coefficients (quantized coefficients) supplied from the quantizer 105 to obtain a compressed image.

In step S39, the dequantizer 108 performs a dequantization process which is a process of dequantizing the coefficients supplied from the quantizer 105. Specifically, the 4×4 Inv Quant 451, the 8×8 Inv Quant 452, the 16×16 Inv Quant 453, the 32×32 Inv Quant 454, the 64×64 Inv Quant 455, or the 128×128 Inv Quant 456 corresponding to the block size of the inter prediction of the dequantizer 108 dequantizes the coefficients supplied from the quantizer 105. The coefficients obtained as a result of the dequantization process are supplied to the inverse orthogonal transformer 109.

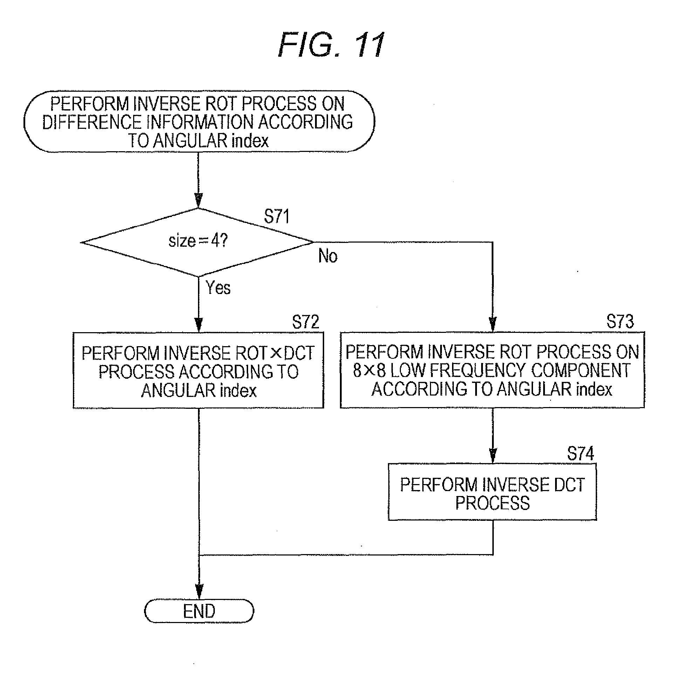

In step S40, the inverse orthogonal transformer 109 performs an inverse ROT process or the like which is a process of performing inverse ROT according to the angular index set in step S35 with respect to the coefficients corresponding to the residual information (difference information). The details of the process of step S40 will be described with reference to Fig. 11 described later.

After the process of step S40 is performed, the flow returns to step S35, and the processes of steps S35 to S40 are repeatedly performed until all of the angular indices of the index numbers 0 to 3 are set as the angular index. Moreover, when all of the angular indices of the index numbers 0 to 3 are set as the angular index, the flow returns to step S31. Moreover, the processes of steps S31 to S40 are repeatedly performed until all sizes of the 4×4, 8×8, 16×16, 32×32, 64×64, and 128×128 pixels are set as the block size of the inter prediction.

Moreover, when all sizes of the 4×4, 8×8, 16×16, 32×32, 64×64, and 128×128 pixels are set as the block size of the inter prediction, and all of the angular indices of the index numbers 0 to 3 are set as the angular index with respect to the inter prediction block of each block size, the flow proceeds to step S41.

In step S41, the motion predictor 116 computes a RD cost from the MV information, the quantized code information, the decoded image with respect to each combination of the inter prediction mode and the angular index. Specifically, the motion predictor 116 generates a prediction image using the motion vector and the reference image supplied from the frame memory 112 with respect to each combination of the inter prediction mode and the angular index. Moreover, the motion predictor 116 computes a difference between the prediction image and the image supplied from the frame rearrangement buffer 102. Moreover, the motion predictor 116 computes Expression (1) described above and calculates the RD cost using the difference, the occurrence coding amount of the compressed image obtained by the process of step S38, and the like.

Moreover, the motion predictor 116 uses the smallest RD cost among the RD costs of the respective combinations of the inter prediction mode corresponding to the block size of the inter prediction and the angular index as the RD cost (P), That is, the motion predictor 116 supplies the RD cost (P) which is the smallest RD cost among the RD costs of the combinations of the inter prediction mode and the angular index and the corresponding motion vector and inter prediction mode information to the motion compensator 113.

In this way, the motion compensator 113 performs a compensation process on the reference image supplied from the frame memory 112 based on the motion vector and the inter prediction mode information supplied from the motion predictor 116 and generates a prediction image. Moreover, the motion compensator 113 supplies the RD cost (P) supplied from the motion predictor 116 and the generated prediction image to the selector 117.

Fig. 10 is a flowchart for describing the details of the process of step S36 of Fig. 9.

In step S51 of Fig. 10, the orthogonal transformer 104 determines whether the block size of the inter prediction is 4×4 pixels.

When it is determined in step S51 that the block size of the inter prediction is 4×4 pixels, in step S52, the orthogonal transformer 104 performs a ROT×DCT process according to an angular index. Specifically, the 4×4 DCT×ROT 501 (Fig. 5) of the orthogonal transformer 104 performs a combined transform of DCT and ROT on the residual information supplied from the computing device 103 according to the angular index set in step S35 of Fig. 9. The 4×4 DCT×ROT 501 supplies the coefficients obtained as a result of the transform to the 4×4 Quant 419 of the quantizer 105.

When it is determined in step S51 that the block size of the inter prediction is not 4×4 pixels, in step S53, the orthogonal transformer 104 performs a DCT process which is a process of performing DCT on the residual information supplied from the computing device 103. Specifically, the 8×8 DCT 412, the 16×16 DCT 413, the 32×32 DCT 414, the 64×64 DCT 415, or the 128×128 DCT 416 corresponding to the block size of the inter prediction of the orthogonal transformer 104 performs DCT on the residual information. The 8×8 pixel low frequency component among the coefficients obtained as a result of the DCT is supplied to the 8×8 ROT 418, and the remaining high frequency component is supplied to the 16×16 Quant 421, the 32×32 Quant 422, the 64×64 Quant 423, or the 128×128 Quant 424 corresponding to the block size of the inter prediction.

In step S54, the 8x8 ROT 418 of the orthogonal transformer 104 performs a ROT process according to the angular index set in step S35 of Fig. 9 with respect to the 8×8 pixel (8×8 size) coefficients of the low frequency component. The 8×8 ROT 418 supplies the 8x8 pixel coefficients obtained as a result of the ROT process to the 8×8 Quant 420, the 16×16 Quant 421, the 32×32 Quant 422, the 64×64 Quant 423, or the 128×128 Quant 424 corresponding to the block size of the intra prediction.

Fig. 11 is a flowchart for describing the process of step S40 of Fig. 9 in detail.

In step S71 of Fig. 11, the inverse orthogonal transformer 109 determines whether the block size of the inter prediction is 4×4 pixels.

When it is determined in step S71 that the block size of the inter prediction is 4×4 pixels, in step S72, the inverse orthogonal transformer 109 performs an inverse ROT×DCT process according to the angular index. Specifically, the 4×4 Inv ROT×Inv DCT 502 (Fig. 5) of the inverse orthogonal transformer 109 performs a combined transform of inverse ROT and inverse DCT on the coefficients supplied from the 4×4 Inv Quant 451 of the dequantizer 108 according to the angular index set in step S35 of Fig. 9. The 4×4 Inv ROT×Inv DCT 502 supplies the residual information obtained as a result of the transform to the adder 110.

When it is determined in step S71 that the block size of the inter prediction is not 4×4 pixels, the flow proceeds to step S73. In step S73, the 8×8 Inv ROT 458 (Fig. 7) of the inverse orthogonal transformer 109 performs an inverse ROT process which is a process of performing inverse ROT according to the angular index set in step S35 of Fig. 9 with respect to the 8×8 pixel (8×8 size) coefficients of the low frequency component among the coefficients of a size of 8×8 pixels or larger supplied from the dequantizer 108. The 8×8 Inv ROT 458 supplies the coefficients obtained as a result of the inverse ROT process to the 8×8 Inv DCT 460, the 16×16 Inv DCT 461, the 32×32 Inv DCT 462, the 64×64 Inv DCT 463, or the 128×128 Inv DCT 464 corresponding to the block size of the inter prediction.

In step S74, the 8×8 Inv DCT 460, the 16×16 Inv DCT 461, the 32×32 Inv DCT 462, the 64×64 Inv DCT 463, or the 128×128 Inv DCT 464 of the inverse orthogonal transformer 109 performs an inverse DCT process which is a process of performing inverse DCT on the coefficients supplied from the 8×8 Inv ROT 458 and the coefficients supplied from the dequantizer 108. The residual information obtained as a result of the inverse DCT process is supplied to the adder 110.

Fig. 12 is a flowchart for describing a process of calculating the RD cost (I) when the intra prediction of step S12 of Fig. 8 is used in detail.

In step S101 of Fig. 12, the intra predictor 114 sets the block size of the intra prediction to one which has not been set among the 4×4, 8×8, 16×16, 32×32, 64×64, and 128×128 pixels.

In step S102, the intra predictor 114 sets an intra prediction mode (Intra direction mode) to one which has not been set among the intra direction modes of which the intra direction mode number is 0, 1, 2, 3, 4, 5, 6, 7, or 8. The intra direction mode number is a number unique to the intra prediction mode, and in the present embodiment, eight intra prediction modes of the numbers 0 to 8 are prepared.

In step S103, the intra predictor 114 performs motion prediction with the block size and the intra prediction mode set in step S101. Specifically, the intra predictor 114 performs an intra prediction process in the set intra prediction mode in respective blocks of the block size set in step S101 using the image supplied from the frame rearrangement buffer 102 and the reference image supplied from the adder 110 and generates the prediction image. The intra predictor 114 supplies the generated prediction image to the computing device 103 via the selector 117.

In step S104, the computing device 103 computes a difference between the image corresponding to the input signal and the intra prediction image (the prediction image generated by the intra prediction process). The computing device 103 supplies the difference obtained as a result of the computation to the orthogonal transformer 104 as residual information.

The processes of steps S105 to S110 are the same as the processes of steps S35 to S40 of Fig. 9, and description thereof will not be provided.

After the process of step S110 is performed, the flow returns to step S105, and the processes of steps S105 to S110 are repeatedly performed until all of the angular indices of the index numbers 0 to 3 are set as the angular index. Moreover, when all of the angular indices of the index numbers 0 to 3 are set as the angular index, the flow returns to step S102. Moreover, the processes of steps S102 to S110 are repeatedly performed until all intra prediction modes of the intra direction mode numbers 0 to 8 are set as the intra prediction mode.

Moreover, when all of the intra direction mode numbers 0 to 8 are set as the intra prediction mode, the flow returns to step S101. Moreover, the processes of steps S101 to S110 are repeatedly performed until all sizes of the $4 \times 4$, $8 \times 8$, $16 \times 16$, $32 \times 32$, $64 \times 64$, and $128 \times 128$ pixels are set as the block size of the intra prediction.

Moreover, when all sizes of the $4 \times 4$, $8 \times 8$, $16 \times 16$, $32 \times 32$, $64 \times 64$, and $128 \times 128$ pixels are set as the block size of the intra prediction, all of the angular indices of the index numbers 0 to 3 are set as the angular index with respect to the block of each block size, and when all of the intra prediction modes of the intra prediction modes 0 to 8 are set as the intra prediction mode, the flow proceeds to step S111.

In step S111, the intra predictor 114 computes a RD cost from the quantized code information and the decoded image with respect to each combination of the intra prediction block size, the intra prediction mode, and the angular index. Specifically, the intra predictor 114 generates a prediction image using the reference image supplied from the frame memory 112 with respect to each combination of the intra prediction block size, the intra prediction mode, and the angular index. Moreover, the intra predictor 114 computes a difference between the prediction image and the image supplied from the frame rearrangement buffer 102. Moreover, the motion predictor 116 computes Expression (1) described above and calculates the RD cost using the difference, the occurrence coding amount of the compressed image obtained by the process of step S108, and the like.

Moreover, the intra predictor 114 uses the smallest RD cost among the RD costs of the respective combinations of the intra prediction block size, the intra prediction mode, and the angular index as the RD cost (I). That is, the intra predictor 114 supplies the RD cost (I) which is the smallest RD cost among the RD costs of the respective combinations of the intra prediction block size, the intra prediction mode, and the angular index and the corresponding prediction image to the selector 117.

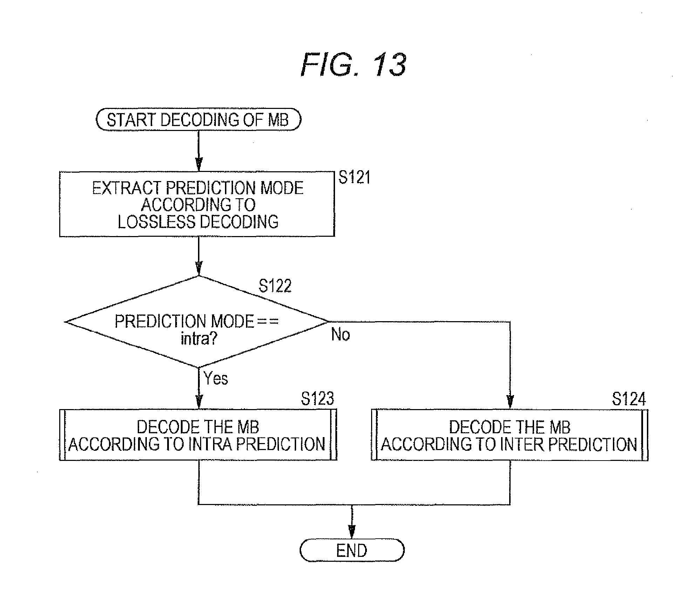

Figs. 13, 14, and 15 are flowcharts of the processes of the decoder of Fig. 3.

Fig. 13 is a flowchart for describing a macroblock (MB) decoding process.

In step S121 of Fig. 13, the lossless decoder 217 reads and acquires the image compression information of the current macroblock from the storage buffer 216 and losslessly decodes the image compression information according to a scheme corresponding to the lossless encoding scheme of the lossless encoder 106 of Fig. 2. By this lossless decoding, the intra prediction mode information or the inter prediction mode information is extracted as the information that indicates the optimal prediction mode of the current macroblock.

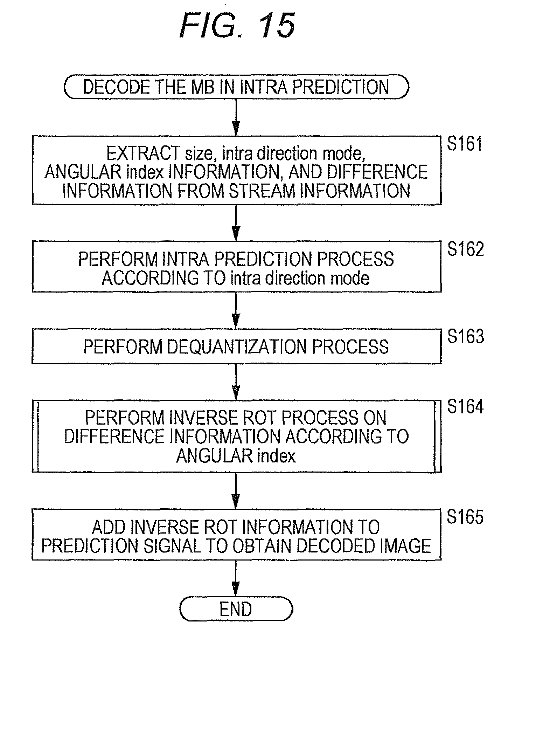

In step S122, the lossless decoder 217 determines whether the information that indicates the optimal prediction mode extracted in step S121 is the intra prediction mode information. When it is determined in step S122 that the information is the intra prediction mode information, in step S123, the decoder decodes the current macroblock (the MB) according to intra prediction. The details of the process of step S123 will be described with reference to Fig. 15 described later.

On the other than, when it is determined in step S122 that the information is not the intra prediction mode information, that is, the information that indicates the optimal prediction mode extracted in step S121 is inter prediction mode information, the flow proceeds to step S124.

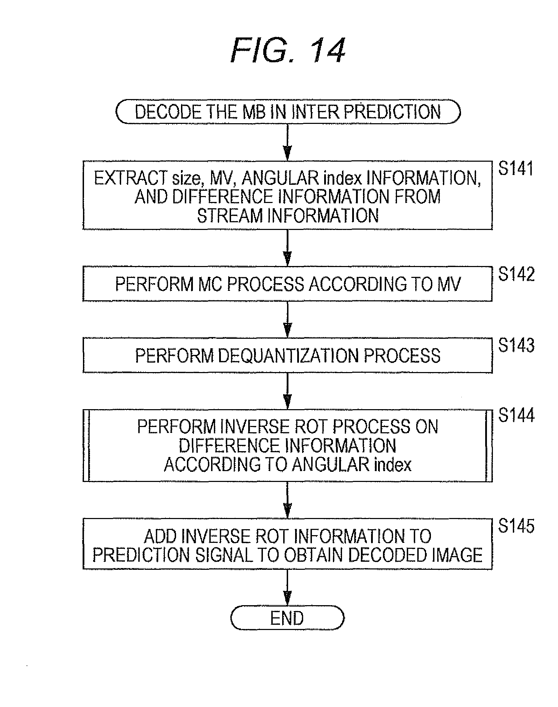

In step S124, the decoder decodes the current macroblock according to inter prediction. The details of the process of step S124 will be described with reference to Fig. 14 described later.

Fig. 14 is a flowchart for describing the details of the process of step S124 of Fig. 13.

In step S141 of Fig. 14, the lossless decoder 217 extracts the quantized coefficients corresponding to the inter prediction block size, the motion vector (MV), the angular index information, and the residual information (difference information) from the image compression information (stream information) acquired from the storage buffer 216. Specifically, the lossless decoder 217 losslessly decodes the image compression information to obtain the inter prediction mode information, the motion vector, the angular index information, and the quantized coefficients. Moreover, the lossless decoder 217 recognizes the block size of the inter prediction corresponding to the inter prediction mode information. The lossless decoder 217 supplies the quantized coefficients to the dequantizer 218 in respective blocks of the block size corresponding to the inter prediction mode information. Moreover, the lossless decoder 217 supplies the inter prediction mode information and the motion vector to the motion compensator 224 and supplies the angular index to the inverse orthogonal transformer 219.

In step S142, the motion compensator 224 performs a motion compensation process (MC process) on the reference image supplied from the frame memory 223 according to the inter prediction mode information and the motion vector supplied from the lossless decoder 217. Moreover, the motion compensator 224 supplies the prediction image obtained as a result of the motion compensation process to the adder 220 via the switch 227.

In step S143, the dequantizer 218 performs a dequantization process on the quantized coefficients supplied from the lossless decoder 217. Specifically, the 4×4 Inv Quant 601, the 8×8 Inv Quant 602, the 16×16 Inv Quant 603, the 32×32 Inv Quant 604, the 64×64 Inv Quant 605, or the 128×128 Inv Quant 606 corresponding to the inter prediction block size of the dequantizer 218 dequantizes the quantized coefficients. The dequantizer 218 supplies the coefficients obtained as a result of the dequantization process to the inverse orthogonal transformer 219.

In step S144, the inverse orthogonal transformer 219 performs an inverse ROT process or the like according to the angular index supplied from the lossless decoder 217 with respect to the coefficients corresponding to the difference information (the residual information) supplied from the dequantizer 218. Since the details of the process of step S144 are the same as those described in Fig. 11, the description thereof will not be provided.

In step S145, the adder 220 adds the residual information (inverse ROT information) obtained as a result of the process of step S144 to the prediction image (prediction signal) supplied from the motion compensator 224 via the switch 227 to obtain a decoded image. The decoded image is supplied to the intra predictor 225, is supplied to the frame memory 223 via the deblocking filter 226, or is supplied to the outside via the deblocking filter 226, the frame rearrangement buffer 221, and the D/A converter 222.

Fig. 15 is a flowchart for describing the details of the process of step S123 of Fig. 13.

In step S161 of Fig. 15, the lossless decoder 217 extracts quantized coefficients corresponding to the intra prediction block size, the intra prediction mode, the angular index information, and the residual information (difference information) from the image compression information (stream information) acquired from the storage buffer 216. Specifically, the lossless decoder 217 losslessly decodes the image compression information to obtain the intra prediction mode information, the angular index information, and the quantized coefficients. Moreover, the lossless decoder 217 recognizes the intra prediction mode and the intra prediction block size from the intra prediction mode information. The lossless decoder 217 supplies the quantized coefficients to the dequantizer 218 in respective blocks of the intra prediction block size. Moreover, the lossless decoder 217 supplies the intra prediction mode information to the intra predictor 225 and supplies the angular index to the inverse orthogonal transformer 219.

In step S162, the intra predictor 225 performs an intra prediction process on the reference image supplied from the adder 220 according to the intra prediction mode information supplied from the lossless decoder 217. Moreover, the intra predictor 225 supplies the prediction image obtained as a result of the intra prediction process to the adder 220 via the switch 227.

In step S163, the dequantizer 218 performs a dequantization process on the quantized coefficients supplied from the lossless decoder 217 in a manner similarly to the process of step S143 of Fig. 14. The dequantizer 218 supplies the coefficients obtained as a result of the dequantization process to the inverse orthogonal transformer 219.

In step S164, the inverse orthogonal transformer 219 performs an inverse ROT process or the like on the coefficients corresponding to the difference information supplied from the dequantizer 218 in a manner similarly to the process of step S144 according to the angular index supplied from the lossless decoder 217.

In step S165, the adder 220 adds the residual information (inverse ROT information) obtained as a result of the process of step S164 to the prediction image (prediction signal) supplied from the intra predictor 225 via the switch 227 to obtain the decoded image. The decoded image is supplied to the intra predictor 225, is supplied to the frame memory 223 via the deblocking filter 226, or is output to the outside via the deblocking filter 226, the frame rearrangement buffer 221, and the D/A converter 222.

[Description of Computer to which Present technology is applied]

Next, the above-described series of processing can be executed not only by hardware but also by software. When the series of processing is executed by software, a program included in the software is installed in a general-purpose computer or the like.

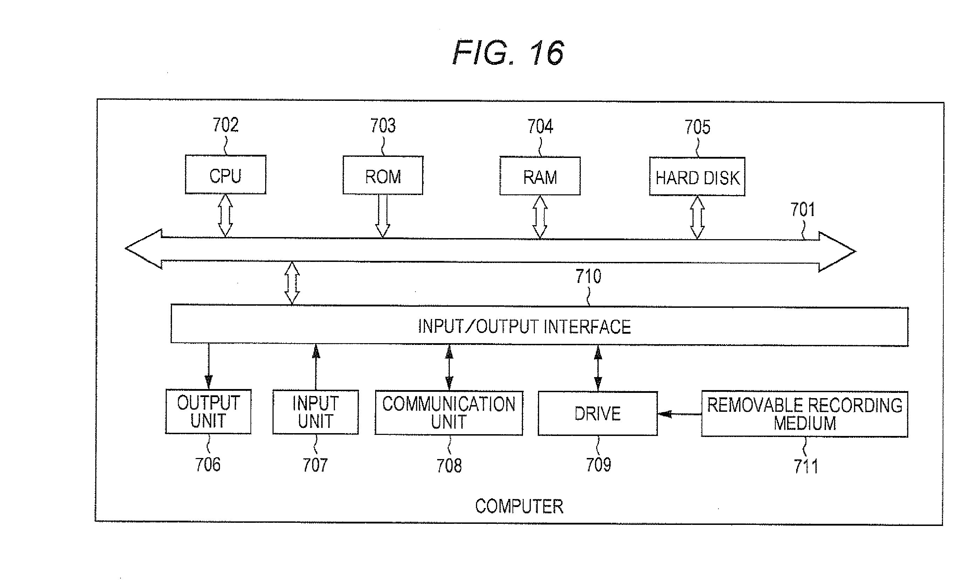

With reference now to Fig. 16, an exemplary configuration of a computer according to an embodiment of the present technology, in which a program for executing the above-described series of processing is installed, will be described.

The program may be preliminarily recorded in a hard disk 705 or a ROM 703 as a recording medium equipped in the computer.

Alternatively, the program may be stored (recorded) in a removable recording medium 711. The removable recording medium 711 may be provided as so-called package software. Here, the removable recording medium 711 may be, for example, a flexible disk, a CD-ROM (compact disc read only memory), a MO (magneto optical) disc, a DVD (digital versatile disc), a magnetic disc, a semiconductor memory or the like.

The program may be installed in the internal hard disk 705 by down loading the program to a computer via a communication network or a broadcasting network, in addition to installing the program in the computer from the removable recording medium 711 as described above. That is to say, the program may be transferred in a wireless manner from a download site to the computer via a digital broadcasting satellite or may be transferred in a wired manner to the computer via a network such as a LAN (local area network) or the Internet.

The computer has incorporated therein a CPU (central processing unit) 702, and an input/output interface 710 is connected to the CPU 702 via a bus 701.

The CPU 702 executes the program stored in the ROM (read only memory) 703 in response to commands which are input via the input/output interface 710 by a user operating an input unit 707 or the like. Alternatively, the CPU 702 executes the program stored in the hard disk 705 by loading the program in a RAM (random access memory) 704.

In this way, the CPU 702 executes the processing corresponding to the above-described flowcharts or the processing performed by the configuration illustrated in the block diagrams. Then, the CPU 702 outputs, transmits, or records the processing results through an output unit 706, through a communication unit 708, or in the hard disk 705, for example, via the input/output interface 710 as required.

The input unit 707 includes a keyboard, a mouse, a microphone, and the like. The output unit 706 includes an LCD (liquid crystal display), a speaker, and the like.

Here, in this specification, the processing that the computer executes in accordance with the program may not be executed in a time-sequential manner in the order described in the flowcharts. That is to say, the processing that the computer executes in accordance with the program includes processing that is executed in parallel or separately (for example, parallel processing or object-based processing).

Moreover, the program may be executed by a single computer (processor) and may be executed by a plurality of computers in a distributed manner. Furthermore, the program may be executed by being transferred to a computer at a remote location.

The embodiments of the present technology are not limited to the above-described embodiments, and various changes can be made without departing from the spirit of the present technology.

Moreover, the present technology can take the following configurations.

(1) An image processing device including:

a dequantization unit that dequantizes a quantized image to obtain a low frequency component having a predetermined size of the image, which is obtained by performing a second orthogonal transform after a first orthogonal transform, and to obtain a high frequency component, which is a component other than the low frequency component of the image and is obtained by the first orthogonal transform; and
an inverse orthogonal transform unit that, when a size of the image is the predetermined size, performs a third inverse orthogonal transform, which is a combined transform of a first inverse orthogonal transform corresponding to the first orthogonal transform and a second inverse orthogonal transform corresponding to the second orthogonal transform, on the image which is the low frequency component, and that, when the size of the image is larger than the predetermined size, performs the second inverse orthogonal transform on the low frequency component and performs the first inverse orthogonal transform on the low frequency component having been subjected to the second inverse orthogonal transform and the high frequency component obtained by the dequantization unit.

(2) The image processing device according to (1), wherein
the predetermined size is 4×4 pixels.
(3) The image processing device according to (1), wherein
the predetermined size is 4x4 pixels when the size of the image is 4×4 pixels and is 8×8 pixels when the size of the image is 8×8 pixels or lager,
when the size of the image is 4×4 pixels, the inverse orthogonal transform unit performs the third inverse orthogonal transform on the image which is the low frequency component, when the size of the image is 8×8 pixels or larger, the inverse orthogonal transform unit performs the second inverse orthogonal transform on the low frequency component and performs the first inverse orthogonal transform on the low frequency component having been subjected to the second inverse orthogonal transform and the high frequency component obtained by the dequantization unit.

(4) The image processing device according to any one of (1) to (3), wherein
the first orthogonal transform is a discrete cosine transform (DCT), and
the second orthogonal transform is a rotation transform (ROT).

(5) The image processing device according to any one of (1) to (4), further including:

an orthogonal transform unit that, when the size of the image is the predetermined size, performs a third orthogonal transform, which is a combined transform of the first orthogonal transform and the second orthogonal transform, on the image, and that, when the size of the image is larger than the predetermined size, performs the first orthogonal transform on the image and performs the second orthogonal transform on the low frequency component having the predetermined size of the image having been subjected to the first orthogonal transform; and
a quantization unit that quantizes the image having the predetermined size having been subjected to the third orthogonal transform or quantizes the high frequency component, which is the component other than the low frequency component and is obtained by the first orthogonal transform, and the low frequency component obtained by the second orthogonal transform.

(6) An image processing method of an image processing device including:

a dequantization unit that dequantizes a quantized image to obtain a low frequency component having a predetermined size of the image, which is obtained by performing a second orthogonal transform after a first orthogonal transform, and to obtain a high frequency component, which is a component other than the low frequency component of the image and is obtained by the first orthogonal transform; and
an inverse orthogonal transform unit that, when a size of the image is the predetermined size, performs a third inverse orthogonal transform, which is a combined transform of a first inverse orthogonal transform corresponding to the first orthogonal transform and a second inverse orthogonal transform corresponding to the second orthogonal transform, on the image which is the low frequency component, and that, when the size of the image is larger than the predetermined size, performs the second inverse orthogonal transform on the low frequency component and performs the first inverse orthogonal transform on the low frequency component having been subjected to the second inverse orthogonal transform and the high frequency component obtained by the dequantization unit,
the method including the steps of:

allowing the dequantization unit to obtain the low frequency component and the high frequency component; and
allowing the inverse orthogonal transform unit to perform the third inverse orthogonal transform on the image which is the low frequency component when the size of the image is the predetermined size, to perform the second inverse orthogonal transform on the low frequency component when the size of the image is larger than the predetermined size, and to perform the first inverse orthogonal transform on the low frequency component having been subjected to the second inverse orthogonal transform and the high frequency component obtained by the dequantization unit.

(7) A program for causing a computer to function as:

a dequantization unit that dequantizes a quantized image to obtain a low frequency component having a predetermined size of the image, which is obtained by performing a second orthogonal transform after a first orthogonal transform, and to obtain a high frequency component, which is a component other than the low frequency component of the image and is obtained by the first orthogonal transform; and
an inverse orthogonal transform unit that, when a size of the image is the predetermined size, performs a third inverse orthogonal transform, which is a combined transform of a first inverse orthogonal transform corresponding to the first orthogonal transform and a second inverse orthogonal transform corresponding to the second orthogonal transform, on the image which is the low frequency component, and that, when the size of the image is larger than the predetermined size, performs the second inverse orthogonal transform on the low frequency component and performs the first inverse orthogonal transform on the low frequency component having been subjected to the second inverse orthogonal transform and the high frequency component obtained by the dequantization unit.

REFERENCE SIGNS LIST

| | |
|---|---|
| 104 | Orthogonal transformer |
| 105 | Quantizer |
| 108 | Dequantizer |
| 109 | Inverse orthogonal transformer |
| 218 | Dequantizer |
| 219 | Inverse orthogonal transformer |
| 701 | Bus |
| 702 | CPU |
| 703 | ROM |
| 704 | RAM |
| 705 | Hard disk |
| 706 | Output unit |
| 707 | Input unit |
| 708 | Communication unit |
| 709 | Drive |
| 710 | Input/output interface |
| 711 | Removable recording medium |

**Claims**

1. An image processing device comprising:

a dequantization unit that dequantizes a quantized image to obtain a low frequency component having a predetermined size of the image, which is obtained by performing a second orthogonal transform after a first orthogonal transform, and to obtain a high frequency component, which is a component other than the low frequency component of the image and is obtained by the first orthogonal transform; and

an inverse orthogonal transform unit that, when a size of the image is the predetermined size, performs a third inverse orthogonal transform, which is a combined transform of a first inverse orthogonal transform corresponding to the first orthogonal transform and a second inverse orthogonal transform corresponding to the second orthogonal transform, on the image which is the low frequency component, and that, when the size of the image is larger than the predetermined size, performs the second inverse orthogonal transform on the low frequency component and performs the first inverse orthogonal transform on the low frequency component having been subjected to the second inverse orthogonal transform and the high frequency component obtained by the dequantization unit.

2. The image processing device according to claim 1, wherein
the predetermined size is $4 \times 4$ pixels.

3. The image processing device according to claim 1, wherein
the predetermined size is $4 \times 4$ pixels when the size of the image is $4 \times 4$ pixels and is 8x8 pixels when the size of the image is 8x8 pixels or larger,
when the size of the image is 4x4 pixels, the inverse orthogonal transform unit performs the third inverse orthogonal transform on the image which is the low frequency component, and
when the size of the image is 8x8 pixels or larger, the inverse orthogonal transform unit performs the second inverse orthogonal transform on the low frequency component and performs the first inverse orthogonal transform on the low frequency component having been subjected to the second inverse orthogonal transform and the high frequency component obtained by the dequantization unit.

4. The image processing device according to claim 1, wherein
the first orthogonal transform is a discrete cosine transform (DCT), and
the second orthogonal transform is a rotation transform (ROT).

**5.** The image processing device according to claim 1, further comprising:

an orthogonal transform unit that, when the size of the image is the predetermined size, performs a third orthogonal transform, which is a combined transform of the first orthogonal transform and the second orthogonal transform, on the image, and that, when the size of the image is larger than the predetermined size, performs the first orthogonal transform on the image and performs the second orthogonal transform on the low frequency component having the predetermined size of the image having been subjected to the first orthogonal transform; and

a quantization unit that quantizes the image having the predetermined size having been subjected to the third orthogonal transform or quantizes the high frequency component, which is the component other than the low frequency component and is obtained by the first orthogonal transform, and the low frequency component obtained by the second orthogonal transform.

**6.** An image processing method of an image processing device comprising:

a dequantization unit that dequantizes a quantized image to obtain a low frequency component having a predetermined size of the image which is obtained by performing a second orthogonal transform after a first orthogonal transform and to obtain a high frequency component which is a component other than the low frequency component of the image and is obtained by the first orthogonal transform; and

an inverse orthogonal transform unit that, when a size of the image is the predetermined size, performs a third inverse orthogonal transform, which is a combined transform of a first inverse orthogonal transform corresponding to the first orthogonal transform and a second inverse orthogonal transform corresponding to the second orthogonal transform, on the image which is the low frequency component, and that, when the size of the image is larger than the predetermined size, performs the second inverse orthogonal transform on the low frequency component and performs the first inverse orthogonal transform on the low frequency component having been subjected to the second inverse orthogonal transform and the high frequency component obtained by the dequantization unit,

the method comprising the steps of:

allowing the dequantization unit to obtain the low frequency component and the high frequency component; and

allowing the inverse orthogonal transform unit to perform the third inverse orthogonal transform on the image which is the low frequency component when the size of the image is the predetermined size, to perform the second inverse orthogonal transform on the low frequency component when the size of the image is larger than the predetermined size, and to perform the first inverse orthogonal transform on the low frequency component having been subjected to the second inverse orthogonal transform and the high frequency component obtained by the dequantization unit.

**7.** A program for causing a computer to function as:

a dequantization unit that dequantizes a quantized image to obtain a low frequency component having a predetermined size of the image, which is obtained by performing a second orthogonal transform after a first orthogonal transform, and to obtain a high frequency component, which is a component other than the low frequency component of the image and is obtained by the first orthogonal transform; and

an inverse orthogonal transform unit that, when a size of the image is the predetermined size, performs a third inverse orthogonal transform, which is a combined transform of a first inverse orthogonal transform corresponding to the first orthogonal transform and a second inverse orthogonal transform corresponding to the second orthogonal transform, on the image which is the low frequency component, and that, when the size of the image is larger than the predetermined size, performs the second inverse orthogonal transform on the low frequency component and performs the first inverse orthogonal transform on the low frequency component having been subjected to the second inverse orthogonal transform and the high frequency component obtained by the dequantization unit.

FIG. 1

FIG. 2

EP 2 595 384 A1

FIG. 3

FIG. 4

QUANTIZED
COEFFICIENTS TO
LOSSLESS ENCODER

RESIDUAL INFORMATION
OF INPUT SIGNAL AND
PREDICTION SIGNAL

DECODED IMAGE
INFORMATION TO ADDER

EP 2 595 384 A1

FIG. 5

ANGULAR index

| | | | | |
|---|---|---|---|---|
| 501 4×4 DCT×ROT | 419 4×4 Quant. | 451 4×4 Inv Quant. | 502 4×4 Inv ROT×Inv DCT | |
| 412 8×8 DCT | 418 8×8 ROT | 420 8×8 Quant. | 452 8×8 Inv Quant. | 458 8×8 Inv ROT | 460 8×8 Inv DCT |

8×8 LOW FREQUENCY COMPONENT

8×8 LOW FREQUENCY COMPONENT

| | | | | |
|---|---|---|---|---|
| 413 16×16 DCT | 421 16×16 Quant. | 453 16×16 Inv Quant. | 461 16×16 Inv DCT |
| 414 32×32 DCT | 422 32×32 Quant. | 454 32×32 Inv Quant. | 462 32×32 Inv DCT |
| 415 64×64 DCT | 423 64×64 Quant. | 455 64×64 Inv Quant. | 463 64×64 Inv DCT |
| 416 128×128 DCT | 424 128×128 Quant. | 456 128×128 Inv Quant. | 464 128×128 Inv DCT |

RESIDUAL INFORMATION OF INPUT SIGNAL AND PREDICTION SIGNAL

HIGH FREQUENCY COMPONENT HIGHER THAN 8×8

QUANTIZED COEFFICIENTS TO LOSSLESS ENCODER

HIGH FREQUENCY COMPONENT HIGHER THAN 8×8

DECODED IMAGE INFORMATION TO ADDER

EP 2 595 384 A1

# FIG. 6

## FIG. 7

ANGULAR index

| 601 | 4×4 Inv Quant. |
| 701 | 4×4 Inv ROT×Inv DCT |

| 602 | 8×8 Inv Quant. |
| 608 | 8×8 Inv ROT |
| 610 | 8×8 Inv DCT |

8×8 LOW FREQUENCY COMPONENT

RESIDUAL INFORMATION FROM LOSSLESS DECODER

| 603 | 16×16 Inv Quant. |
| 611 | 16×16 Inv DCT |

| 604 | 32×32 Inv Quant. |
| 612 | 32×32 Inv DCT |

| 605 | 64×64 Inv Quant. |
| 613 | 64×64 Inv DCT |

| 606 | 128×128 Inv Quant. |
| 614 | 128×128 Inv DCT |

HIGH FREQUENCY COMPONENT HIGHER THAN 8×8

DECODED IMAGE INFORMATION TO ADDER

# FIG. 8

```
        ( START ENCODING OF MB )
                   │
                   ▼
    ┌──────────────────────────────┐  S11
    │ CALCULATE RD COST (P) WHEN    │
    │ INTER PREDICTION IS USED      │
    └──────────────────────────────┘
                   │
                   ▼
    ┌──────────────────────────────┐  S12
    │ CALCULATE RD COST (I) WHEN    │
    │ INTRA PREDICTION IS USED      │
    └──────────────────────────────┘
                   │
                   ▼
                        S13
              ◇─────────────◇
             RD COST (I) >
             RD COST (P)?        Yes ──────────────┐
              ◇─────────────◇                      │
                   │                               │
                   │ No                            │
                   ▼           S14                 ▼            S15
    ┌──────────────────────────────┐   ┌──────────────────────────────┐
    │ ENCODE THE MB ACCORDING TO    │   │ ENCODE THE MB ACCORDING TO    │
    │ INTRA PREDICTION              │   │ INTER PREDICTION              │
    └──────────────────────────────┘   └──────────────────────────────┘
                   │                               │
                   └───────────────┬───────────────┘
                                   ▼
                        ( END OF ENCODING OF MB )
```

EP 2 595 384 A1

**FIG. 9**

```
        ( CALCULATION OF RD COST (P) )
        ( WHEN INTER PREDICTION IS USED )
                    │
                    ▼                    S31
              ╱───────────╲
             ╱  for size = 4,╲
             ╲ 8, 16, 32, 64, 128╱ ◄──────────────────────────────┐
              ╲───────────╱                                         │
                    │                                               │
                    ▼                    S32                        │
        ┌─────────────────────┐                                    │
        │  PERFORM MOTION      │                                    │
        │ PREDICTION WITH THE  │                                    │
        │   size AND OBTAIN MV │                                    │
        └─────────────────────┘                                    │
                    │                    S33                        │
        ┌─────────────────────┐                                    │
        │  PERFORM MOTION      │                                    │
        │ COMPENSATION (MC)    │                                    │
        │  ACCORDING TO MV     │                                    │
        └─────────────────────┘                                    │
                    │                    S34                        │
        ┌─────────────────────┐                                    │
        │ COMPUTE DIFFERENCE   │                                    │
        │ BETWEEN INPUT SIGNAL │                                    │
        │   AND MC IMAGE       │                                    │
        └─────────────────────┘                                    │
                    │                                               │
                    └──────────────────┐                           │
```

S35
for ANGULAR index = 0, 1, 2, 3

S36
PERFORM ROT PROCESS ON DIFFERENCE INFORMATION ACCORDING TO ANGULAR index

S37
PERFORM QUANTIZATION PROCESS

S38
PERFORM LOSSLESS ENCODING ON QUANTIZED COEFFICIENTS

S39
PERFORM DEQUANTIZATION PROCESS

S40
PERFORM INVERSE ROT PROCESS ON DIFFERENCE INFORMATION ACCORDING TO ANGULAR index

S41
COMPUTE RD COST FROM MV INFORMATION, QUANTIZED CODE INFORMATION, AND DECODED IMAGE, AND USE SMALLEST RD COST FROM COMBINATION OF size AND ANGULAR index

END

# FIG. 10

PERFORM ROT PROCESS ON DIFFERENCE INFORMATION ACCORDING TO ANGULAR index

S51

size = 4?

No

Yes

S52

PERFORM ROT×DCT PROCESS ACCORDING TO ANGULAR index

S53

PERFORM DCT PROCESS

S54

PERFORM ROT PROCESS ON 8×8 LOW FREQUENCY COMPONENT ACCORDING TO ANGULAR index

END

# FIG. 11

PERFORM INVERSE ROT PROCESS ON
DIFFERENCE INFORMATION ACCORDING
TO ANGULAR index

S71

size = 4?

No

Yes

S72

PERFORM INVERSE ROT×DCT
PROCESS ACCORDING TO
ANGULAR index

S73

PERFORM INVERSE ROT PROCESS ON
8×8 LOW FREQUENCY COMPONENT
ACCORDING TO ANGULAR index

S74

PERFORM INVERSE DCT
PROCESS

END

FIG. 12

CALCULATION OF RD COST (I) WHEN INTRA PREDICTION IS USED

S101 for size = 4, 8, 16, 32, 64, 128

S102 for intra direction mode = 0, 1, 2, 3, 4, 5, 6, 7, 8

S103 PERFORM intra PREDICTION

S104 CALCULATE DIFFERENCE BETWEEN INPUT SIGNAL AND INTRA PREDICTION IMAGE

S105 for ANGULAR index = 0, 1, 2, 3

S106 PERFORM ROT PROCESS ON DIFFERENCE INFORMATION ACCORDING TO ANGULAR index

S107 PERFORM QUANTIZATION PROCESS

S108 PERFORM LOSSLESS ENCODING ON QUANTIZED COEFFICIENTS

S109 PERFORM DEQUANTIZATION PROCESS

S110 PERFORM INVERSE ROT PROCESS ON DIFFERENCE INFORMATION ACCORDING TO ANGULAR index

S111 CALCULATE RD COST FROM QUANTIZED CODE INFORMATION AND DECODED IMAGE AND USE SMALLEST RD COST FROM COMBINATION OF size, intra direction mode, AND ANGULAR index

END

# FIG. 13

```
( START DECODING OF MB )
            │
            ▼
┌───────────────────────┐ S121
│ EXTRACT PREDICTION MODE│
│     ACCORDING TO       │
│   LOSSLESS DECODING    │
└───────────────────────┘
            │
            ▼
         S122
      ╱         ╲
     ╱ PREDICTION ╲      No
    ╱  MODE == ─────────────────┐
    ╲   intra?   ╱               │
     ╲         ╱                 │
      ╲       ╱                  │
        Yes                      │
         │                       │
         ▼ S123                  ▼ S124
┌──────────────────────┐  ┌──────────────────────┐
│    DECODE THE MB      │  │    DECODE THE MB      │
│ ACCORDING TO INTRA    │  │ ACCORDING TO INTER    │
│    PREDICTION         │  │    PREDICTION         │
└──────────────────────┘  └──────────────────────┘
         │                       │
         └───────────┬───────────┘
                     ▼
                ( END )
```

## FIG. 14

```
( DECODE THE MB IN INTER PREDICTION )
              │
              ▼
┌─────────────────────────────────────────┐ S141
│ EXTRACT size, MV, ANGULAR index          │
│ INFORMATION, AND DIFFERENCE              │
│ INFORMATION FROM STREAM INFORMATION      │
└─────────────────────────────────────────┘
              │
              ▼
┌─────────────────────────────────────────┐ S142
│ PERFORM MC PROCESS ACCORDING TO MV       │
└─────────────────────────────────────────┘
              │
              ▼
┌─────────────────────────────────────────┐ S143
│ PERFORM DEQUANTIZATION PROCESS           │
└─────────────────────────────────────────┘
              │
              ▼
┌─────────────────────────────────────────┐ S144
│ PERFORM INVERSE ROT PROCESS ON           │
│ DIFFERENCE INFORMATION                   │
│ ACCORDING TO ANGULAR index               │
└─────────────────────────────────────────┘
              │
              ▼
┌─────────────────────────────────────────┐ S145
│ ADD INVERSE ROT INFORMATION TO           │
│ PREDICTION SIGNAL TO OBTAIN DECODED IMAGE│
└─────────────────────────────────────────┘
              │
              ▼
         (   END   )
```

# FIG. 15

( DECODE THE MB IN INTRA PREDICTION )

EXTRACT size, intra direction mode,
ANGULAR index INFORMATION, AND DIFFERENCE
INFORMATION FROM STREAM INFORMATION ⟶ S161

PERFORM INTRA PREDICTION PROCESS
ACCORDING TO intra direction mode ⟶ S162

PERFORM DEQUANTIZATION PROCESS ⟶ S163

PERFORM INVERSE ROT PROCESS ON
DIFFERENCE INFORMATION ACCORDING TO
ANGULAR index ⟶ S164

ADD INVERSE ROT INFORMATION TO
PREDICTION SIGNAL TO OBTAIN DECODED IMAGE ⟶ S165

( END )

## FIG. 16

EP 2 595 384 A1

**INTERNATIONAL SEARCH REPORT**

| | International application No. |
|---|---|
| | PCT/JP2011/065735 |

**A. CLASSIFICATION OF SUBJECT MATTER**
*H04N7/30*(2006.01)i

According to International Patent Classification (IPC) or to both national classification and IPC

**B. FIELDS SEARCHED**

Minimum documentation searched (classification system followed by classification symbols)
H04N7/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | Ken McCann et al., Samsung's Response to the Call for Proposals on Video Compression Technology, Joint Collaborative Team on Video Coding (JCT-VC) of ITU-T SG16 WP3 and ISO/IEC JTC1/SC29/WG11 1st Meeting: Dresden, DE, Document: JCTVC-A124, ITU-T, 2010.04.15 | 1-7 |
| Y | Fletcher Dunn, Ian Parberry, translated by Koichi MATSUDA, chapter 7, Gyoretsu to Senkei Henkan, Jitsurei de Manabu 3D Sugaku, [online], O'Reilly Japan, Inc., 2008.10, pages 97 to 120, Washo (Nihongo Hon'yakuban) no Sample PDF, [retrieval date 16 September 2011 (16.09.2011)], Internet <URL>:ftp://ftp.oreilly.co.jp/9784873 113777/g3d_sample02.pdf | 1-7 |

| | Further documents are listed in the continuation of Box C. | | See patent family annex. |
|---|---|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 September, 2011 (16.09.11) | 27 September, 2011 (27.09.11) |

| Name and mailing address of the ISA/ | Authorized officer |
|---|---|
| Japanese Patent Office | |
| Facsimile No. | Telephone No. |

Form PCT/ISA/210 (second sheet) (July 2009)